# EUROPEAN PATENT SPECIFICATION

(11) **EP 2 305 465 B1**
(45) Date of publication and mention of the grant of the patent: **23.05.2012**
(21) Application number: 10178280.3
(22) Date of filing: 22.09.2010
(51) Int. Cl.: B41C 1/05, B41N 1/12, C08K 5/13, C08K 5/00

(54) **Resin composition and relief printing plate precursor for laser engraving, and method for producing the same**
Harzzusammensetzung und Reliefdruckplattenvorläufer für Lasergravierung, und Verfahren zu deren Herstellung
Composition de résine et précurseur de plaque de démarrage d'impression en relief pour gravure au laser, et son procédé de fabrication

(30) Priority: 30.09.2009 JP 2009227393
(43) Date of publication of application: 06.04.2011
(73) Proprietor: Fujifilm Corporation, Minato-ku Tokyo (JP)
(72) Inventor: Yoshida, Kenta, Shizuoka-ken (JP)
(74) Representative: HOFFMANN EITLE

(56) References cited:
- EP-A1- 1 887 423
- EP-A2- 1 939 244
- EP-A2- 2 058 123
- WO-A1-02/19035

## Description

### BACKGROUND OF THE INVENTION

### Field of the Invention

The present invention relates to a resin composition for laser engraving, a relief printing plate precursor for laser engraving, a method for producing the relief printing plate precursor for laser engraving, a relief printing plate, and a method for making the relief printing plate.

### Description of the Related Art

A relief printing plate is a letterpress printing plate including a relief layer having concavities and convexities. Such a relief layer having concavities and convexities may be obtained by patterning a relief forming layer including a photosensitive composition containing, as a main component, for example, an elastomeric polymer such as a synthetic rubber, a resin such as a thermoplastic resin, or a mixture of a resin and a plasticizer, to form concavities and convexities. Among such relief printing plates, a relief printing plate having a soft relief layer is sometimes referred to as a flexographic plate.

In recent years, methods of plate making (patterning) of a relief forming layer by means of scanning exposure have been studied.

For example, many proposals have been made with regard to a method of plate making in which a relief forming layer is directly engraved using a laser, which is called a "direct engraving CTP method". The direct engraving CTP method is literally a method of forming concavities and convexities, which serve as a relief, by engraving using a laser, and is advantageous in that the relief shape can be freely controlled. For this reason, in the case of forming an image like an outline character, it is possible to engrave the region of the image more deeply than other regions, or in the case of forming a fine halftone dot image, it is possible to engrave so as to form shoulders in consideration of resistance to the printing pressure.

In general, in a relief forming layer, a hydrophobic carboxylic acid ester or a phosphoric acid ester has been utilized as a plasticizer from the viewpoints of compatibility and application of flexibility. However, when such a plasticizer is included, scraps which are generated upon laser engraving adhere to the plate, and there is a problem in that it is not easy to remove the scraps by using only water or an alkali treatment liquid.

Taking the above problem into consideration, it may be thought that removability of scraps generated by engraving (that is, rinsability) can be enhanced by using, for example, a compound having an acidic group as an additive in a relief forming layer, as described in Japanese Patent Application Laid-Open (JP-A) No. 11-249291 and Japanese National Phase Publication No. 2004-514159. However, there is a problem in that water resistance of such a plate itself may be deteriorated.

In addition, as a technique of enhancing the removability of scraps generated by engraving, that is, enhancing rinsability, for example, as described in Japanese National Phase Publication No. 2005-534525, a relief forming layer containing a hydrophobic elastomer binder, an inactive plasticizer, and a component for crosslinkage is known. Since this relief forming layer hardly melts by the action of laser irradiation and further, accumulation of decomposed products in the relief forming layer can be removed by a simple operation using water or an aqueous detergent, it can be said that rinsability is excellent.

EP 1 887 423 A1 is concerned with a laser-decomposable resin composition which is applicable to a thick layer, has high engraving sensitivity and is capable of being efficiently engraved with low laser energy. The resin composition comprises (A) a compound including at least one structure selected from a carboxyl group and a carboxylic acid anhydride structure and at least one hetero atom selected from N, S and O atoms other than the structure in its molecule; and (B) a binder polymer; and may comprise (C) a polymerizable monomer compound, as well as an initiator and a polymerization inhibitor. The polymerization inhibitor, which is to prevent undesirable thermal polymerization, can amongst others be p-methoxyphenol.

The resin composition for laser engraving described in EP 2 058 123 A2 comprises a binder polymer comprising at least one polyester (A) selected from the group consisting of a polyester comprising a hydroxycarboxylic acid unit, polycaprolactone, poly(butylene succinic acid), and derivatives thereof. The resin composition may further comprise as a binder polymer (B) a polymer containing a carbon-carbon unsaturated bond in at least any one of its main chain and side chain. The resin composition preferably further contains a polymerizable compound (C) which may be an addition polymerizable compound, a light-to-heat conversion agent (D) and a polymerization initiator (E). Furthermore, a small amount of a thermal polymerization inhibitor may be added to the resin composition in order to prevent undesirable thermal polymerization of the polymerizable compound (C) during the production or preservation of the resin composition. Amongst many examples of polymerization inhibitors, p-methoxyphenol is exemplified. The resin composition of EP 2 058 123 A2 can be used in a printing plate precursor having high engraving sensitivity with laser and being capable of undergoing direct platemaking with laser engraving.

### SUMMARY OF THE INVENTION

According to an aspect of the invention, there is provided a resin composition for laser engraving, comprising at least a phenol derivative (A) represented by the following Formula (A), a binder polymer (B), and a crosslinking agent (C) as specified in appended Claim 1, wherein the content of the Formula (A), a binder polymer (B), and a crosslinking agent (C), wherein the content of the phenol derivative (A) with respect to the total solid content of the resin composition is from 5% by mass to 50% by mass: 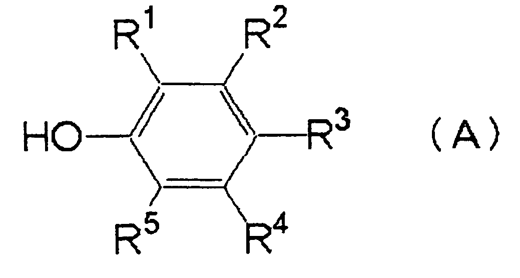 wherein R¹, R², R³, R⁴, and R⁵ each independently represent a hydrogen atom or a monovalent substituent; at least one of R¹, R², R³, R⁴, or R⁵ is a monovalent substituent having a structure represented by -X-R⁶; X represents a single bond, -O-, -NR⁷-, -S-, -COO-, -CONR⁸-, -COS-, -OCO-, -NR⁹CO-, -SCO-, -OCONH-, -NR¹⁰CONH-, -SCONH-, -SO₃-, -OSO₂- or -SO₂-; R⁶ represents an alkyl group, an alkenyl group, an alkynyl group, an aryl group, or a heterocyclic group, in which the number of constituent atoms other than hydrogen atoms in each of these groups is from 1 to 20; and R⁷, R⁸, R⁹, and R¹⁰ each independently represent a hydrogen atom, an alkyl group, an alkenyl group, an alkynyl group, an aryl group, or a heterocyclic group, in which the number of constituent atoms other than hydrogen atoms in each of these groups is from 1 to 20.

### BRIEF DESCRIPTION OF THE DRAWINGS

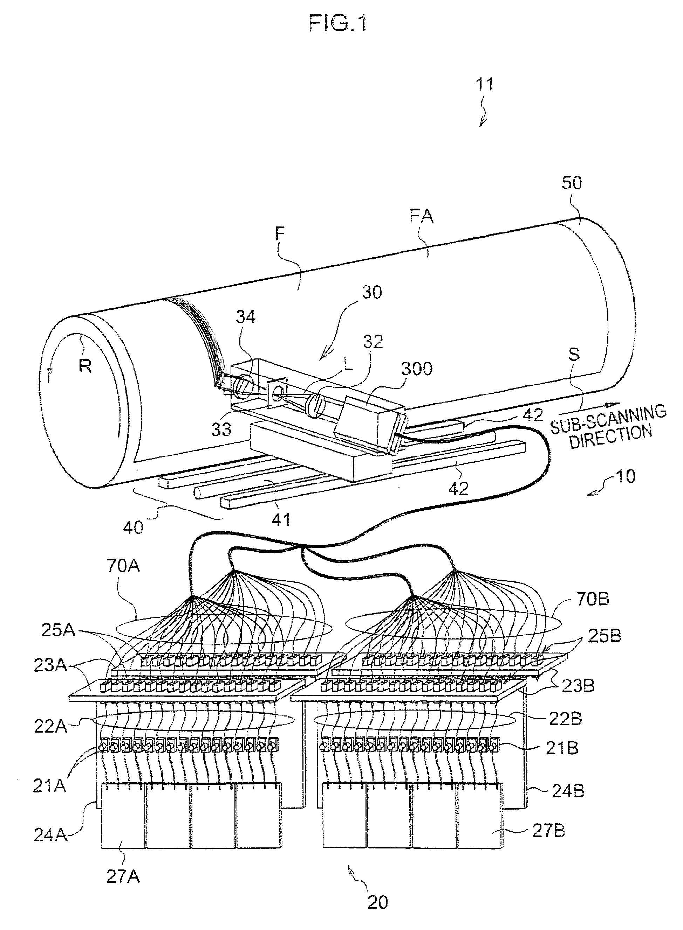

Fig. 1 is a schematic diagram (perspective diagram) showing a plate making apparatus provided with a semiconductor laser recording device equipped with fiber, which can be applied to the present invention.

### DETAILED DESCRIPTION OF THE INVENTION

The resin composition for laser engraving of the present invention is characterized in that it contains at least a phenol derivative (A) represented by the following Formula (A), a binder polymer (B), and a crosslinking agent (C) as specified in appended Claim 1, wherein the content of the phenol derivative (A) with respect to the total solid content of the resin composition is from 5% by mass to 50% by mass.

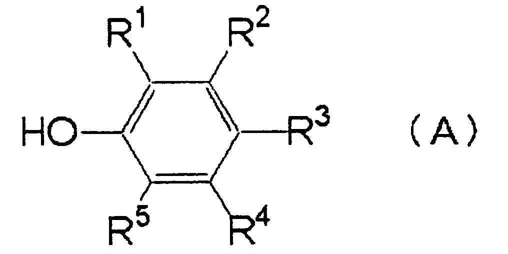

In Formula (A), R¹, R², R³, R⁴, and R⁵ each independently represent a hydrogen atom or a monovalent substituent, and at least one of R¹, R², R³, R⁴, and R⁵ is a monovalent substituent having a structure represented by -X-R⁶. X represents a single bond, -O-, -NR⁷-, -S-, -COO-, -CONR⁸-, -COS-, -OCO-, -NR⁹CO-, -SCO-, -OCONH-, NR¹⁰CONH-, -SCONH-, -SO₃-, -OSO₂-, or -SO₂-. R⁶ represents an alkyl group, an alkenyl group, an alkynyl group, an aryl group, or a heterocyclic group, in which the number of constituent atoms other than hydrogen atoms in each of these groups is from I to 20. R⁷, R⁸, R⁹, and R¹⁰ each independently represent a hydrogen atom, an alkyl group, an alkenyl group, an alkynyl group, an aryl group, or a heterocyclic group, in which the number of constituent atoms other than hydrogen atoms in each of these groups is from 1 to 20.

In the resin composition for laser engraving of the present invention, it is preferable that a glass transition temperature (Tg) of the binder polymer (B) is from 20°C to 200°C.

Further, it is also preferable that the binder polymer (B) has a functional group capable of reacting with a crosslinkable group contained in the crosslinking agent (C).

Furthermore, it is preferable that the binder polymer (B) includes one or more selected from the group consisting of polyvinyl acetal, a derivative thereof, and an acrylic resin, and it is particularly preferable that the binder polymer (B) includes polyvinyl butyral or a derivative thereof.

In addition, in a preferable embodiment, the resin composition for laser engraving of the present invention further includes a photothermal conversion agent (D) that absorbs light having a wavelength of from 700 nm to 1300 nm.

A first exemplary embodiment of the relief printing plate precursor for laser engraving of the present invention is characterized in that it has a relief forming layer including the resin composition for laser engraving of the present invention.

Further, a second exemplary embodiment of the relief printing plate precursor for laser engraving of the present invention is characterized in that it has a crosslinked relief forming layer obtained by crosslinking a relief forming layer including the resin composition for laser engraving of the present invention.

The method for producing a relief printing plate precursor for laser engraving of the present invention is characterized in that it includes (i) a layer forming process of forming a relief forming layer including the resin composition for laser engraving of the present invention and (ii) a crosslinking process of crosslinking the relief forming layer using at least one of heat or light to form a crosslinked relief forming layer.

Further, the method for making a relief printing plate of the present invention is characterized in that it includes (i) a layer forming process of forming a relief forming layer including the resin composition for laser engraving of the present invention, (ii) a crosslinking process of crosslinking the relief forming layer using at least one of heat or light to form a crosslinked relief forming layer, and (iii) an engraving process of laser engraving the crosslinked relief forming layer. Further, it is preferable that the method for making a relief printing plate of the present invention further includes (iv) a rinsing process of washing the crosslinked relief forming layer with an alkali treatment liquid. In addition, it is also preferable that the (ii) crosslinking process is performed using heat.

The relief printing plate of the present invention is a relief printing plate which has a relief layer and is produced by the method for making a relief printing plate of the present invention.

Herein, it is preferred that a Shore A hardness of the relief layer in the relief printing plate is from 50° to 90°.

According to the present invention, a resin composition for laser engraving, which is suitable for a relief forming layer of a relief printing plate precursor for laser engraving that has excellent water resistance and excellent rinsability with respect to engraving scraps generated due to laser engraving, can be provided.

Further, according to the present invention, a relief printing plate precursor for laser engraving that has excellent water resistance and excellent rinsability with respect to engraving scraps generated due to laser engraving, and a method for producing the same can be provided. Moreover, a method for making a relief printing plate using the relief printing plate precursor for laser engraving, and a relief printing plate obtained by the method can be provided.

The present invention is explained in detail below.

### <Resin composition for laser engraving>

The resin composition for laser engraving of the present invention (hereinafter, simply referred to as "resin composition" in some cases) is characterized in that it contains at least a phenol derivative (A) represented by Formula (A), a binder polymer (B), and a crosslinking agent (C) as specified in appended Claim 1, wherein the content of the phenol derivative (A) with respect to the total solid content of the resin composition is from 5% by mass to 50% by mass.

Because of having the above configuration, the resin composition for laser engraving of the present invention is suitable for a relief forming layer of a relief printing plate precursor for laser engraving, which has excellent water resistance and excellent rinsability with respect to engraving scraps generated due to laser engraving.

It should be noted that the resin composition for laser engraving of the present invention can be applied to a wide range without any particular limitation, in addition to the use for a relief forming layer of a relief printing plate precursor that is subjected to laser engraving. The resin composition for laser engraving of the present invention can be applied for forming, for example, other material forms in which concavities and convexities or openings are formed at their surfaces, such as various printing plates or molded bodies on which images are formed by laser engraving, such as intaglio printing plates, porous printing plates, and stamps.

Above all, in a preferable embodiment, the resin composition for laser engraving of the present invention is applied to a relief forming layer that is provided on an appropriate support.

Note that, in the present application, with regard to the explanation of a relief printing plate precursor for laser engraving, a layer which serves as an image forming layer to be subjected to laser engraving and has a flat surface is referred to as a relief forming layer, and a layer that is obtained by subjecting the above relief forming layer to laser engraving to form concavities and convexities at its surface is referred to as a relief layer. Further, a relief forming layer that is in the state of being crosslinked is referred to as a crosslinked relief forming layer.

Hereinafter, essential components (A) to (C) included in the resin composition of the present invention and, further, other components which are added as needs arise are explained.

### [Phenol derivative (A) represented by Formula (A)]

The resin composition of the present invention contains a phenol derivative (A) represented by the following Formula (A) (hereinafter, sometimes referred to as a "phenol derivative (A)").

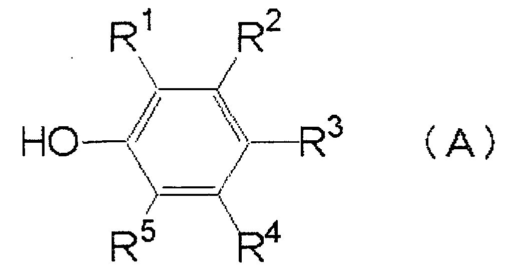

In Formula (A), R¹, R², R³, R⁴, and R⁵ each independently represent a hydrogen atom or a monovalent substituent, and at least one of R¹, R², R³, R⁴, and R⁵ is a monovalent substituent having a structure represented by -X-R⁶. X represents a single bond, -O-, -NR⁷-, -S-, -COO-, -CONR⁸-, -COS-, -OCO-, -NR⁹CO-, -SCO-, -OCONH-, -NR¹⁰CONH-, -SCONH-, -SO₃-, -OSO₂-, or -SO₂-. R⁶ represents an alkyl group, an alkenyl group, an alkynyl group, an aryl group, or a heterocyclic group, in which the number of constituent atoms other than hydrogen atoms in each of these groups is from 1 to 20, R⁷, R⁸, R⁹, and R¹⁰ each independently represent a hydrogen atom, an alkyl group, an alkenyl group, an alkenyl group, an aryl group, or a heterocyclic group, in which the number of constituent atoms other than hydrogen atoms in each of these groups is from 1 to 20.

In Formula (A), at least one of R¹, R², R³, R⁴, and R⁵ is a monovalent substituent having a structure represented by -X-R⁶. Particularly, it is preferable that one to three (more preferably, one or two) of R¹, R², R³, R⁴, and R⁵ is (are) a monovalent substituent having a structure represented by -X-R⁶, in view of compatibility with other components included in the resin composition.

In -X-R⁶, X represents a single bond, -O-, -NR⁷-, -S-, -COO-, -CONR⁸-, -COS-, -OCO-, -NR⁴CO-, -SCO-, -OCONH-, -NR¹⁰CONH-, -SCONH-, -SO₃-, -OSO₂-, or -SO₂-. Among them, in view of compatibility with other components included in the resin composition, X preferably represents a single bond, -O-, -COO-, -CONR⁸-, or -SO₃-, and particularly preferably -COO-.

Further, in -X-R⁶, R⁶ represents an alkyl group, an alkenyl group, an alkynyl group, an aryl group, or a heterocyclic group, in which the number of constituent atoms other than hydrogen atoms in each of these groups is from 1 to 20. Among them, in view of flexibility of the relief forming layer, R⁶ preferably represents an alkyl group, an alkenyl group, or an alkynyl group, and particularly preferably an alkyl group.

Note that, these groups as R⁶ may further have a substituent such as an alkyl group, an alkynyl group, an alkynyl group, an aryl group, a heterocyclic group, an alkoxy group, a hydroxy group, or a halogen atom, and the number of constituent atoms other than hydrogen atoms in R⁶ (including the substituent) should be from 1 to 20.

R⁷, R⁸, R⁹, and R¹⁰ each independently represent a hydrogen atom, an alkyl group, an alkenyl group, an alkynyl group, an aryl group, or a heterocyclic group, in which the number of constituent atoms other than hydrogen atoms in each of these groups is from 1 to 20.

Among them, in view of availability of materials, R⁷, R⁸, R⁹, and R¹⁰ each independently preferably represent a hydrogen atom, an alkyl group, or an aryl group, and particularly preferably a hydrogen atom or an alkyl group.

Note that, these groups as R⁷, R⁸, R⁹, and R¹⁰ may further have a substituent such as an alkyl group, an alkenyl group, an alkynyl group, an aryl group, a heterocyclic group, an alkoxy group, a hydroxy group, or a halogen atom, and the number of constituent atoms other than hydrogen atoms in each of R⁷, R⁸, R⁹, and R¹⁰ (including the substituent) should be from 1 to 20.

In Formula (A), any of R¹, R², R³, R⁴, or R⁵ may be a monovalent substituent that is different from the monovalent substituent having a structure represented by -X-R⁶.

In this case, examples of the monovalent substituent that is different from the monovalent substituent having a structure represented by -X-R⁶ include an alkyl group, an alkenyl group, an alkynyl group, an aryl group, a heterocyclic group, an alkoxy group, a hydroxy group, a cyano group, a nitro group, and a halogen atom.

As the embodiments of the phenol derivative represented by Formula (A), the following embodiments are preferable from the viewpoints of compatibility with other components included in the resin composition.

Namely, embodiments in which R¹ and R⁵ each independently represent a hydrogen atom, an alkyl group, an alkenyl group, an alkynyl group, an aryl group, a heterocyclic group, an alkoxy group, a cyano group, a nitro group, or a halogen atom; any one or two of R², R³, and R⁴ represents (represent) a monovalent substituent having a structure represented by -X-R⁶, and the rest of R², R³, and R⁴ represent (represents) a hydrogen atom, an alkyl group, an alkenyl group, an alkynyl group, an aryl group, a heterocyclic group, an alkoxy group, a cyano group, a nitro group, or a halogen atom: X represents a single bond, -O-, -COO-, -CONR⁸-, or -SO₃-; and R⁶ represents an alkyl group, an alkenyl group, or an alkynyl group are preferable.

Further, embodiments in which R¹ and R⁵ each independently represent a hydrogen atom, a hydroxy group, or a halogen atom; any one or two of R², R³, and R⁴ represents (represent) a monovalent substituent having a structure represented by -X-R⁶, and the rest of R², R³, and R⁴ represent (represents) a hydrogen atom, a hydroxy group, or a halogen atom; X represents -COO-; and R⁶ represents an alkyl group are more preferable.

In the present invention, the molecular weight of the phenol derivative (A) is preferably from 100 to 1000, more preferably from 140 to 700, and even more preferably from 180 to 400. When the molecular weight of the phenol derivative (A) is less than 100, the phenol derivative easily volatilizes from the film and there are cases where the effect of its addition lowers. When the molecular weight of the phenol derivative (A) is more than 1000, there are cases where the phenol derivative is hardly mixed with other components in the resin composition of the present invention.

In the present invention, the polarity ClogP (calculated log P) of the phenol derivative (A) is preferably 0 or higher, more preferably 0.5 or higher, and even more preferably 1 or higher. When the ClogP of the phenol derivative (A) is lower than 0.5, solubility of the phenol derivative in water becomes higher and there are cases where water resistance of the film lowers.

Note that, the polarity "ClogP" of the phenol derivative (A) is determined according to the following calculation method.

Namely, ClogP is calculated using CLOGP program built in PCModels of DayLight Chemical Information Systems Co., Ltd.

Further, it is preferable that the phenol derivative (A) according to the present invention is a compound that does not have an ethylenically unsaturated bond in the molecule, from the viewpoint of compatibility with other components included in the resin composition. From the viewpoint similar to the above viewpoint, it is preferable that the phenol derivative (A) according to the present invention has one -OH which is bonded to the benzene ring.

Specific examples (exemplified compounds A-1 to A-24) of the phenol derivative (A) according to the present invention are shown below, however, the present invention is not limited to these examples.

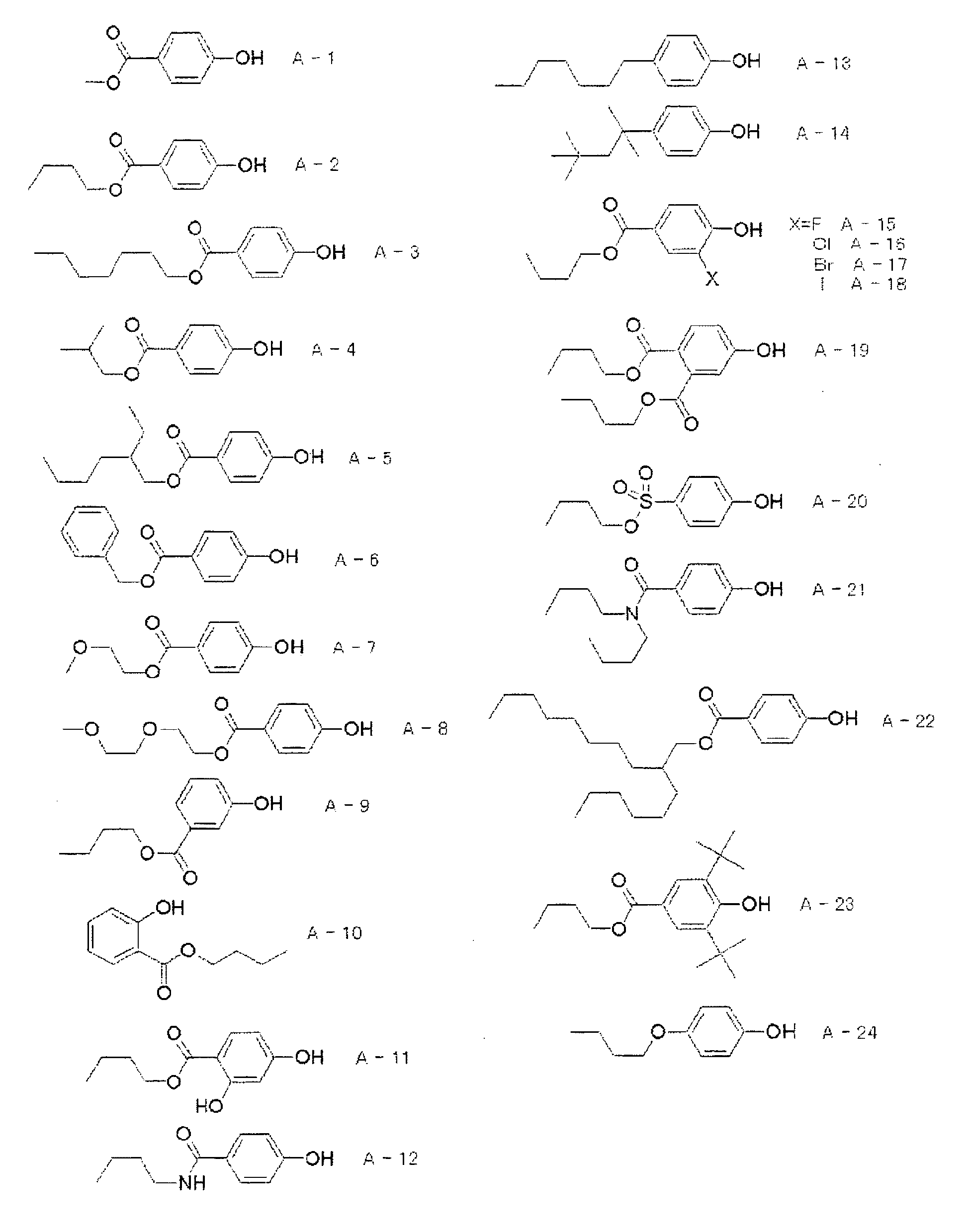

The content of the phenol derivative (A) is from 5% by mass to 50% by mass with respect to the total solid content of the resin composition of the present invention. When the content of the phenol derivative (A) is less than 5% by mass, the effect of improvement in rinsability is not realized. When the content of the phenol derivative (A) is more than 50% by mass, bleed-out occurs and lack of strength becomes a problem when a relief forming layer is formed. From the above viewpoints, the content of the phenol derivative (A) is preferably from 5% by mass to 40% by mass, and more preferably from 5% by mass to 30% by mass.

### [Binder polymer (B)]

The resin composition of the present invention contains a binder polymer (B) (hereinafter, simply referred to as a "binder").

The binder is a polymer component contained in the resin composition of the present invention. The polymer component can be suitably selected from generally used polymer compounds. The polymer compounds may be used alone, or two or more of them may be used in combination. In particular, upon applying the resin composition of the present invention to a printing plate precursor, it is necessary to select the binder while taking into consideration various properties such as ink transferability, dispersibility of engraving scraps, as well as laser engraving property.

In the present invention, the binder may be selected from the group consisting of a polystyrene resin, a polyester resin, a polyamide resin, a polyurea resin, a polyamideimide resin, a polyurethane resin, a polysulfone resin, a polyethersulfone resin, a polyimide resin, a polycarbonate resin, a hydrophilic polymer containing a hydroxyethylene unit, an acrylic resin, an acetal resin, an epoxy resin, a polycarbonate resin, rubber, a thermoplastic elastomer, and the like.

The weight average molecular weight of the binder used in the present invention is preferably from 5,000 to 1,000,000, more preferably from 10,000 to 700,000, and particularly preferably from 15,000 to 500,000.

As the binder, for example, from the viewpoint of laser engraving sensitivity, a polymer containing a partial structure, which is thermally decomposed by exposure or heating, is preferable. Preferable examples of such a polymer include those described in paragraph [0038] of JP-A No. 2008-163081.

For example, when formation of a film which is soft and has flexibility is aimed at, a soft resin or a thermoplastic elastomer is selected as the binder. As such a polymer, those specifically described in paragraphs [0039] and [0040] of JP-A No. 2008-163081 may be used.

Further, in the case of applying the resin composition of the present invention to a relief forming layer in a relief printing plate precursor for laser engraving, it is preferable to use a hydrophilic polymer or an alcoholphilic polymer, from the viewpoints of ease in preparation of the composition for the relief forming layer and improvement in durability to oily ink in the resulting relief printing plate. As the hydrophilic polymer, those specifically described in paragraph [0041] of JP-A No. 2008-163081 may be used.

Concerning the binder according to the present invention, a binder having a glass transition temperature (Tg) of 20°C or higher is particularly preferable from the viewpoint of improvement in engraving sensitivity. Hereinafter, the polymer having such a glass transition temperature is referred to as "non-elastomer". That is, generally, the elastomer is academically defined as a polymer having a glass transition temperature of equal to or lower than an ordinary temperature (see, Kagaku Daijiten, 2nd edition, edited by Foundation for Advancement of International Science, published by Maruzen Co., Ltd., page 154). Therefore, the non-elastomer means a polymer having a glass transition temperature higher than an ordinary temperature. There is no limitation on the upper limit of the glass transition temperature of the non-elastomer, however, from the viewpoint of handling, the glass transition temperature is preferably 200°C or lower, and more preferably from 25°C to 120°C.

In the case of using a polymer having a glass transition temperature of equal to or higher than room temperature (20°C) as the binder, the polymer is in a glassy state at an ordinary temperature. Therefore, the polymer is in the state in which thermal molecular movement is remarkably suppressed, as compared with the case in which the polymer is in a rubbery state. In the laser engraving, at the time of laser irradiation, the heat applied by the infrared laser and the heat generated by the function of a photothermal conversion agent, which is used in combination as desired, are transmitted to the binder that exists at the periphery, so that the binder is thermally decomposed and dissipated. As a result, the binder is engraved to form a concavity.

It is thought that, in the case of using a non-elastomer, when a photothermal conversion agent exists in the state where thermal molecular movements of the non-elastomer are suppressed, heat transmission to the non-elastomer and thermal decomposition of the non-elastomer are effectively caused. Thus, it is estimated that the engraving sensitivity is further increased due to such effects.

In the present invention, when the binder is used for the purpose of enhancing the strength of the film through curing by heating or exposure, a polymer having a carbon-carbon unsaturated bond in the molecule is preferably used as the binder.

Examples of the polymer having a carbon-carbon unsaturated bond in the main chain thereof include SB (polystyrene-polybutadiene), SBS (polystyrene-polybutadiene-polystyrene), SIS (polystyrene-polyisoprene-polystyrene), and SEBS (polystyrene-polyethylene/polybutylene-polystyrene).

Further, examples of the polymer having a carbon-carbon unsaturated bond in a side chain thereof include a polymer which is obtained by introducing a carbon-carbon unsaturated bond such as an allyl group, an acryloyl group, a methacryloyl group, a styryl group, or a vinyl ether group into a side chain of a skeleton of a polymer such as those described above. Any known method can be employed to introduce a carbon-carbon unsaturated bond into a side chain of a polymer. Examples of the method of introducing a carbon-carbon unsaturated bond into a side chain of a polymer include: (1) a method in which a structural unit having a polymerizable group precursor that is obtained by bonding a protective group to a polymerizable group is copolymerized in a polymer, and then the protective group is eliminated to restore the polymerizable group; and (2) a method in which a polymer compound having plural reactive groups such as a hydroxy group, an amino group, an epoxy group, or a carboxy group is prepared, and then the polymer compound is allowed to undergo a polymer reaction with a compound having a group that reacts with the reactive groups and a carbon-carbon unsaturated bond, to thus introduce the carbon-carbon unsaturated bond. According to these methods, the amount of introduction of the unsaturated bond or the polymerizable group into the polymer compound can be controlled.

Further, when the binder is used for the purpose of enhancing the strength of the film through curing by heating or exposure, a polymer having at least one group selected from the group consisting of a hydroxy group, a carboxy group, an isocyanate group, an epoxy group, an acid anhydride residue, an amino group and -SiR¹R²R³ (wherein R¹ to R³ each independently represent a hydrogen atom, a halogen atom, a hydroxy group, or a monovalent organic group; however, at least one of R¹ to R³ is an alkyl group, an alkoxy group, a hydroxy group, or a halogen atom) in a side chain thereof is also preferably used as the binder.

When such a polymer and a crosslinking agent that can react with the above group (a crosslinking agent (C) described below) are used in combination, a crosslinked film can be formed, and it becomes possible to enhance the strength thereof.

It is particularly preferable to use a polymer having a hydroxy group (-OH) (hereinafter, referred to as a "hydroxy group-containing polymer") as the binder, from the viewpoint of the film strength. Herein, the hydroxy group may be an alcoholic hydroxy group, or may be a phenolic hydroxy group.

The skeleton of the hydroxy group-containing polymer is not particularly limited, but an acrylic resin, an epoxy resin, a hydrophilic polymer containing a hydroxyethylene unit, a polyvinyl acetal resin, a polyester resin, a polyurethane resin, and a novolac resin are preferable.

As the polyester resin which is used as the hydroxy group-containing polymer, polyester resins including a unit of hydroxycarboxylic acid such as polylactic acid can be preferably used. As such a polyester resin, specifically, those selected from the group consisting of polyhydroxyalkanoate (PHA), lactic acid polymer, polyglycolic acid (PGA), polycaprolactone (PCL), polybutylene succinate, and derivatives or mixtures thereof are preferable.

As the hydroxy group-containing polymer, novolac resins which are resins obtained by condensation of phenols and aldehydes under the acidic condition may be used.

Preferable examples of the novolac resin include a novolac resin obtained from phenol and formaldehyde, a novolac resin obtained from m-cresol and formaldehyde, a novolac resin obtained from p-cresol and formaldehyde, a novolac resin obtained from o-cresol and formaldehyde, a novolac resin obtained from octylphenol and formaldehyde, a novolac resin obtained from a mixture cresol of m- and p-cresols and formaldehyde, and a novolac resin obtained from a mixture of phenol and cresol (which may be any one of m-cresol, p-cresol, o-cresol, or a mixture cresol of m- and p-cresols, m- and o-cresols, or o- and p-cresols) and formaldehyde.

The novolac resin preferably has a weight average molecular weight of from 800 to 200,000 and a number average molecular weight of from 400 to 60,000.

In the present invention, as the hydroxy group-containing polymer, polyvinyl acetal and a derivative thereof (among them, particularly, polyvinyl butyral (PVB) and a derivative thereof), an acrylic resin having a hydroxy group in a side chain thereof, an epoxy resin having a hydroxy group in a side chain thereof, and the like are preferably described, from the viewpoint of realizing both aqueous ink suitability and UV ink suitability, and at the same time, high engraving sensitivity and good film forming property.

These three kinds of polymers are explained in detail below.

### [Polyvinyl acetal and derivative thereof]

Polyvinyl acetal is a compound obtained by cyclic acetalization of polyvinyl alcohol (which is obtained by saponifying polyvinyl acetate). The polyvinyl acetal derivatives used herein mean polyvinyl acetal derivatives obtained by modifying the above polyvinyl acetal or by adding other copolymerization component to the above polyvinyl acetal.

The content of acetal in polyvinyl acetal (mol% of the vinyl alcohol units which are acetalized, when the total number of moles of vinyl acetate monomer that is a raw material is designated as 100%) is preferably from 30 mol% to 90 mol%, more preferably from 50 mol% to 85 mol%, and particularly preferably from 55 mol% to 78 mol%.

The content of vinyl alcohol units in polyvinyl acetal is preferably from 10 mol% to 70 mol%, more preferably from 15 mol% to 50 mol%, and particularly preferably from 22 mol% to 45 mol%, with respect to the total number of moles of vinyl acetate monomer that is a raw material.

Further, polyvinyl acetal may include a vinyl acetate unit as an additional component, and the content of the vinyl acetate units is preferably from 0.01 mol% to 20 mol%, and more preferably from 0.1 mol% to 10 mol%. The polyvinyl acetal derivatives may further have another copolymerization unit.

Examples of polyvinyl acetal includes polyvinyl butyral, polyvinyl propylal, polyvinyl ethylal, and polyvinyl methylal. Among them, polyvinyl butyral (PVB) is preferable.

Polyvinyl butyral (PVB) is a polymer which is generally obtained by butyralizing polyvinyl alcohol. Further, a polyvinyl butyral derivative may also be used.

Examples of the polyvinyl butyral derivative include an acid-modified PVB obtained by modifying at least a part of the hydroxy groups into acid groups such as carboxy groups or the like, a modified PVB obtained by modifying at least a part of the hydroxy groups into (meth)acryloyl groups, a modified PVB obtained by modifying at least a part of the hydroxy groups into amino groups, and a modified PVB obtained by introducing ethylene glycol, propylene glycol, or a multimer thereof into at least a part of the hydroxy groups.

From the viewpoints of maintaining the balance of engraving sensitivity and film forming property, the molecular weight of polyvinyl acetal or the derivative thereof is preferably from 5,000 to 800,000, more preferably from 8,000 to 500,000, in terms of weight average molecular weight. Further, from the viewpoint of improvement in the rinsability with respect to engraving scraps, the molecular weight is particularly preferably from 50,000 to 300,000.

Hereinafter, polyvinyl butyral (PVB) and derivatives thereof are explained as particularly preferable examples of polyvinyl acetal, however, it should be noted that the present invention is not limited to these compounds.

PVB is also available as a commercially available product. Specific examples of the products which are preferable from the viewpoint of solubility in alcohol (particularly, solubility in ethanol) include "S-LEC B" series and "S-LEC K (KS)" series (all trade names, manufactured by Sekisui Chemical Co., Ltd.), and "DENKA BUTYRAL" (trade name, manufactured by Denki Kagaku Kogyo K.K.). Specific examples of the products which are more preferable from the viewpoint of solubility in alcohol (particularly, solubility in ethanol) include "S-LEC B" series (trade name, manufactured by Sekisui Chemical Co., Ltd.), and "DENKA BUTYRAL" (trade name, manufactured by Denki Kagaku Kogyo K.K.). Particularly preferable examples include "BL-1", "BL-1H", "BL-2", "BL-5", "BL-S", "BX-L", "BM-S", and "BH-S" among the "S-LEC B" series (all trade names, manufactured by Sekisui Chemical Co., Ltd.), and "#3000-1", "#3000-2", "#3000-4", "#4000-2", "#6000-C", "#6000-EP", "#6000-CS", and "#6000-AS" among the "DENKA BUTYRAL" (all trade names, manufactured by Denki Kagaku Kogyo K.K.).

When PVB is used as the hydroxy group-containing polymer for film-forming the relief forming layer, a method of casting and drying a solution prepared by dissolving the polymer in a solvent is preferable from the viewpoint of smoothness of the film surface.

### [Acrylic resin]

Concerning the acrylic resin that can be used as the hydroxy group-containing polymer, an acrylic resin which is obtained by using a known acrylic monomer and has a hydroxy group in the molecule may be used.

Preferable examples of the acrylic monomer which is used in the synthesis of the acrylic resin having a hydroxy group include (meth)acrylic acid esters, crotonic acid esters, and (meth)acrylamides, each of which has a hydroxy group in the molecule. Specific examples of such a monomer include 2-hydroxyethyl (meth)acrylate, 2-hydroxypropyl (meth)acrylate, and 4-hydroxybutyl (meth)acrylate.

Further, the acrylic resin may contain an acrylic monomer other than the above acrylic monomer having a hydroxy group, as a copolymerization component. Specific examples of such an acrylic monomer include (meth)acrylic acid esters such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, 2-ethylhexyl (meth)acrylate, acetoxyethyl (meth)acrylate, phenyl (meth)acrylate, 2-methoxyethyl (meth)acrylate, 2-ethoxyethyl (meth)acrylate, 2-(2-methoxyethoxy)ethyl (meth)acrylate, cyclohexyl (meth)acrylate, benzyl (meth)acrylate, diethylene glycol monomethyl ether (meth)acrylate, diethylene glycol monoethyl ether (meth)acrylate, diethylene glycol monophenyl ether (meth)acrylate, triethylene glycol monomethyl ether (meth)acrylate, triethylene glycol monoethyl ether (meth)acrylate, dipropylene glycol monomethyl ether (meth)acrylate, polyethylene glycol monomethyl ether (meth)acrylate, polypropylene glycol monomethyl ether (meth)acrylate, monomethyl ether (meth)acrylate of a copolymer of ethylene glycol and propylene glycol, N,N-dimethylaminoethyl (meth)acrylate, N,N-diethylaminoethyl (meth)acrylate, and N,N-dimethylaminopropyl (meth)acrylate.

Further, a modified acrylic resin that is configured to include an acrylic monomer having a urethane group or a urea group can be also preferably used.

Above all, from the viewpoint of durability to aqueous ink, alkyl (meth)acrylates such as lauryl (meth)acrylate and (meth)acrylates having an aliphatic cyclic structure such as tert-butylcyclohexyl methacrylate are particularly preferable.

### [Epoxy resin]

As the hydroxy group-containing polymer, it is possible to use an epoxy resin having a hydroxy group in a side chain thereof. Specifically, an epoxy resin obtained by polymerizing an adduct of bisphenol A and epichlorohydrin as a raw material monomer is preferable.

The epoxy resin preferably has a weight average molecular weight of from 800 to 200,000 and a number average molecular weight of from 400 to 60,000.

Among the hydroxy group-containing polymers described above, polyvinyl butyral and a derivative thereof are particularly preferable, from the viewpoints of rinsability and print durability when the relief forming layer is formed using the resin composition of the present invention.

In the polymer of any of the above embodiments, the content of the hydroxy group in the hydroxy group-containing polymer according to the present invention is preferably from 0.1 mmol/g to 15 mmol/g, and more preferably from 0.5 mmol/g to 7 mmol/g.

In the resin composition of the present invention, the binder polymers may be used alone, or two or more binder polymers may be used in combination.

From the viewpoints of the form-retaining property of the coated layer and satisfying the balance of water resistance and engraving sensitivity, the content of the binder in the resin composition of the present invention is preferably from 2% by mass to 85% by mass, more preferably from 5% by mass to 80% by mass, and particularly preferably from 10% by mass to 60% by mass, with respect to the total solid content of the resin composition.

### [Crosslinking agent (C)]

The resin composition of the present invention contains a crosslinking agent (C) as specified in appended Claim 1.

When a crosslinking agent (C) is used in the present invention, a crosslinked structure can be formed in the relief forming layer which is formed using the resin composition of the present invention.

The crosslinking agent used in the present invention as defined in Claim 1 can cure the relief forming layer by polymerization due to the chemical reaction (a radical polymerization reaction, or a crosslinking reaction using an acid or base as an initiator) caused by light or heat.

Specifically, (1) a crosslinking agent having -SiR¹R²R³ (wherein, R¹ to R³ each independently represent a hydrogen atom, a halogen atom, a hydroxy group, or a monovalent organic group; however, at least one of R¹ to R³ represents an alkyl group, an aryl group, an alkoxy group, a hydroxy group, or a halogen atom); or (2) a compound having plural groups selected from the group consisting of acid anhydride residues and isocyanate groups is used.

### [(1) Compound having -SiR¹R²R³]

In the present invention, a compound having at least -SiR¹R²R³ as the crosslinkable group can be used.

Herein, R¹ to R³ each independently represent a hydrogen atom, a halogen atom, a hydroxy group, or a monovalent organic group (for example, an alkyl group, an aryl group, an alkoxy group, and the like are described.). However, at least one of R¹ to R³ represents an alkyl group, an aryl group, an alkoxy group, a hydroxy group, or a halogen atom.

Particularly, it is preferable that at least two of R¹ to R³ represent an alkoxy group or a halogen atom. It is particularly preferable that R¹ to R³ each independently represent an alkoxy group or a halogen atom. In addition, from the viewpoint of ease of handling of the compound, it is preferable that at least two of R¹ to R³ represent an alkoxy group.

The alkoxy group in R¹ to R³ is preferably an alkoxy group having 1 to 30 carbon atoms, more preferably an alkoxy group having 1 to 15 carbon atoms, and even more preferably an alkoxy group having 1 to 5 carbon atoms, from the viewpoints of rinsability and print durability.

Further, examples of the halogen atom in R¹ to R³ include a fluorine atom, a chlorine atom, a bromine atom, and an iodine atom. Among them, a chlorine atom and a bromine atom are preferable from the viewpoint of ease of synthesis and stability, and a chlorine atom is more preferable.

Above all, it is preferred that all of R¹ to R³ represent a methoxy group or an ethoxy group.

Further, a compound having two or more -SiR¹R²R³s is also preferably used. Particularly, a compound having two to six -SiR¹R²R³s is preferably used.

As a group which links the two or more -SiR¹R²R³s in the compound having two or more -SiR¹R²R³s, an organic group having a valency of two or more is described. An organic group which has a valency of two or more and contains a heteroatom (N, S, or O) is preferable from the viewpoint of having high engraving sensitivity. An organic group which has a valency of two or more and contains a sulfur atom is more preferable.

The compound having -SiR¹R²R³ is preferably a compound that has two groups in each of which methoxy groups or ethoxy groups are bonded to the Si atom (that is, all of R¹ to R³ of -SiR¹R²R³ represent a methoxy group or an ethoxy group) in the molecule, wherein these Si atoms are linked to each other through an alkylene group containing a heteroatom, particularly preferably a sulfur atom.

Examples of the compound having -SiR¹R²R³ include vinyltrichlorosilane, vinyltrimethoxysilane, vinyltriethoxysilane, β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, γ-acryloxypropyltrimethoxysilane, N-(β-aminoethyl)-γ-aminopropylmethyldimethoxysilane, N-(β-aminoethyl)-γ-aminopropyltrimethoxysilane, N-(β-aminoethyl)-γ-aminopropyltriethoxysilane, γ-aminopropyltrimethoxysilane, γ-aminopropyltriethoxysilane, N-phenyl-γ-aminopropyltrimethoxysilane, γ-mercaptopropyltrimethoxysilane, γ-chloropropyltrimethoxysilane, and γ-ureidopropyltriethoxysilane.

Preferable specific examples of the compound having -SiR¹R²R³ used in the present invention include compounds represented by the following formulae. However, the present invention is not limited to these compounds.

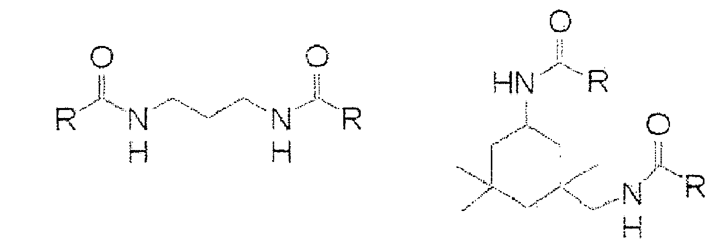

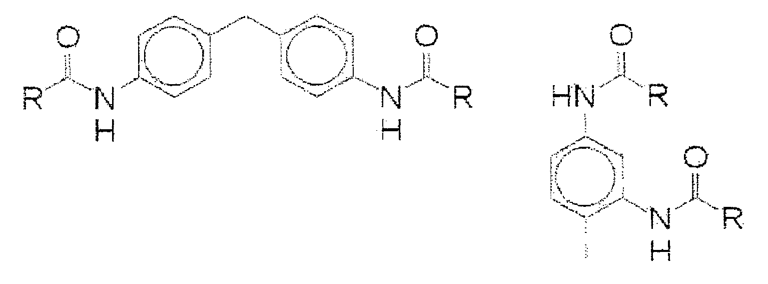

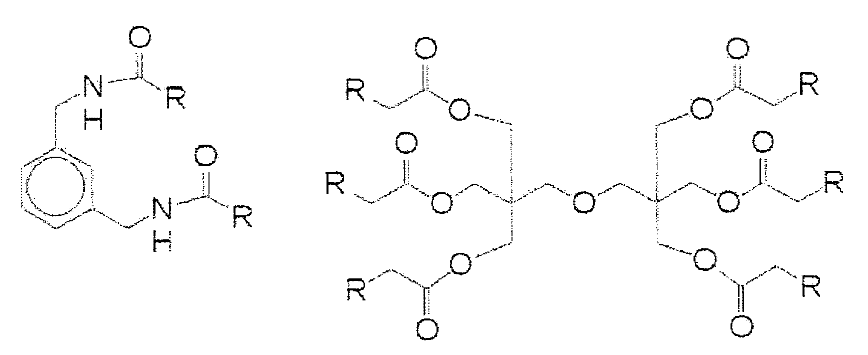

In each of the above formulae, R represents a partial structure selected from the structures shown below. When plural Rs or plural R¹s exist in the molecule, these may be the same or different from each other. It is preferred that these are the same in view of suitability for synthesis. Note that, in the following structures, Et represents an ethyl group, and Me represents a methyl group.

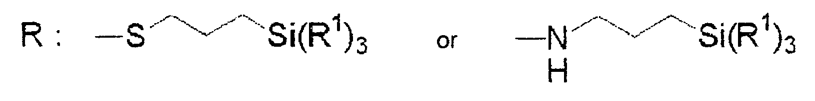

R¹ : —OMe , -OEt ,

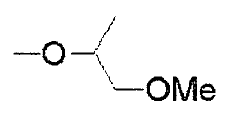

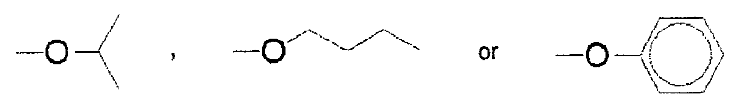

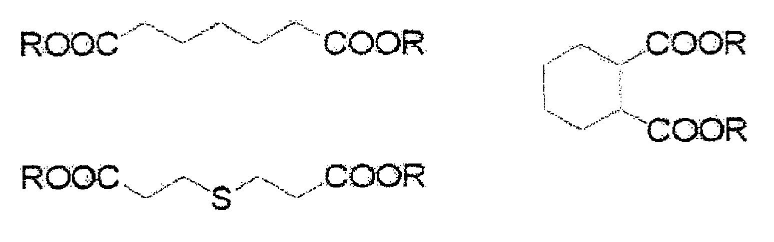

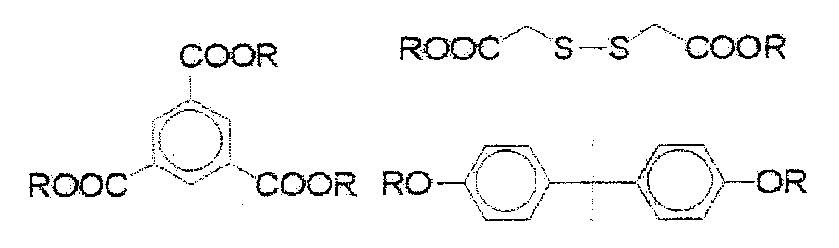

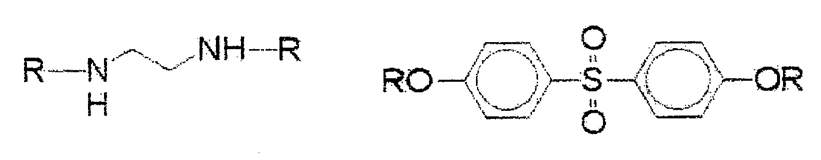

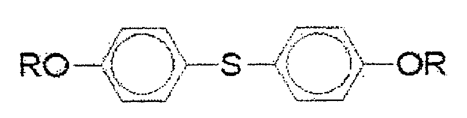

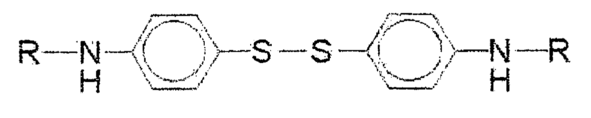

In each of the above formulae, R represents a partial structure shown below. R¹ has the same meaning as that described above. When plural Rs or plural R¹s exist in the molecule, these may be the same or different from each other. It is preferred that these are the same in view of suitability for synthesis.

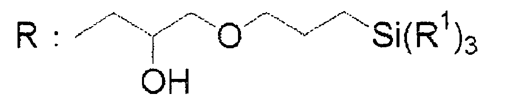

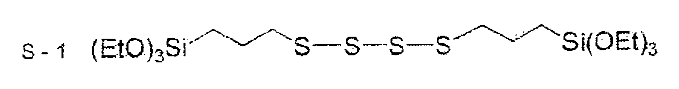

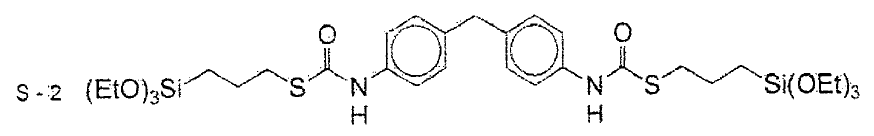

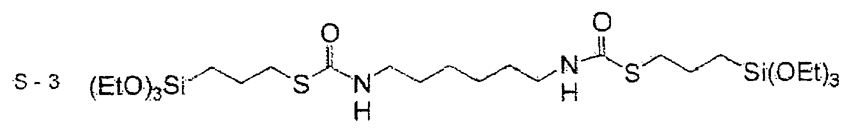

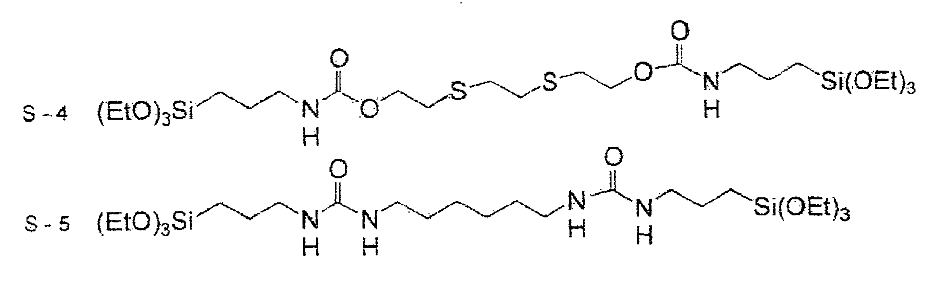

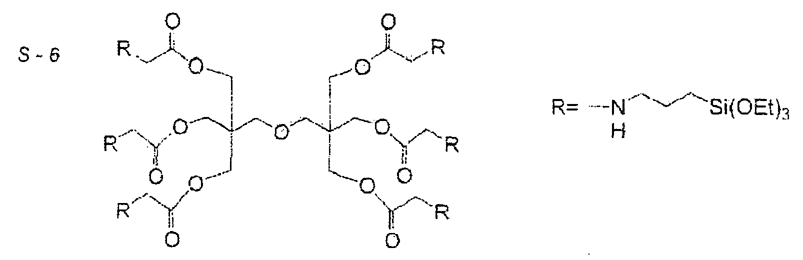

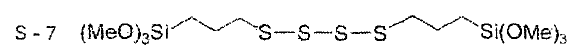

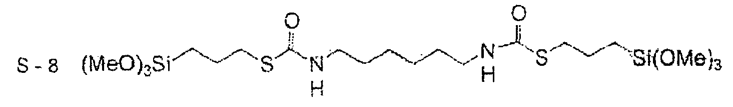

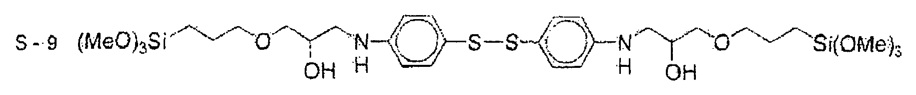

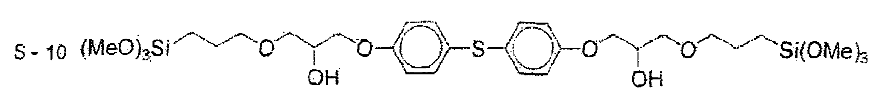

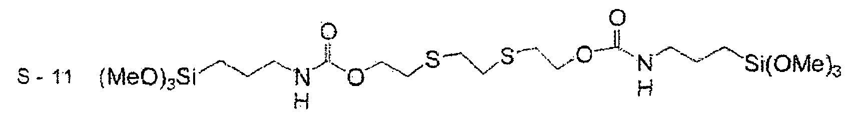

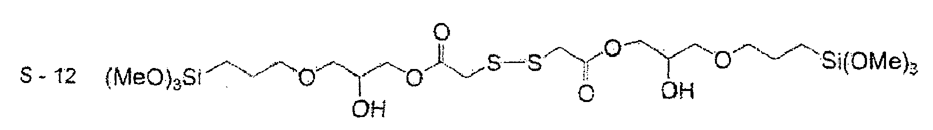

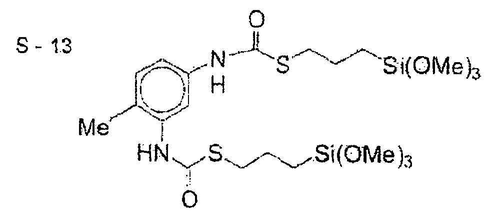

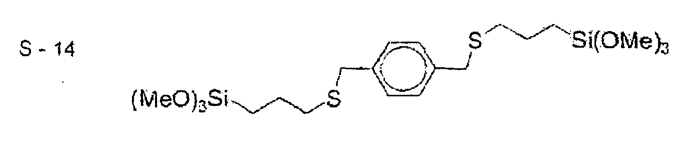

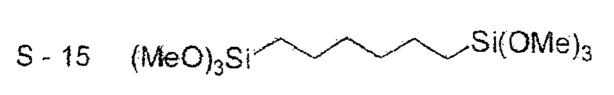

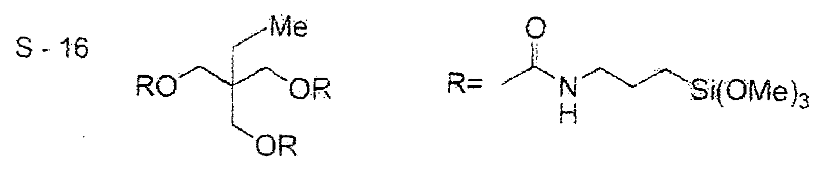

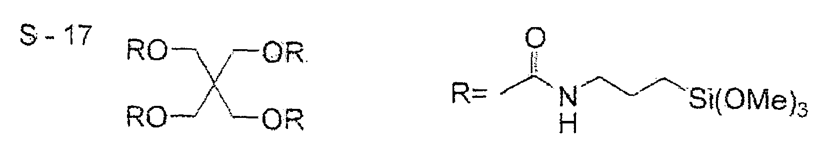

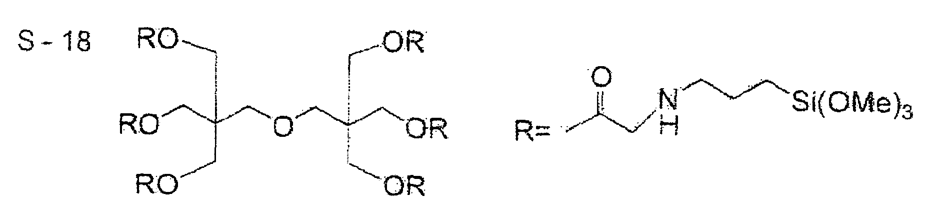

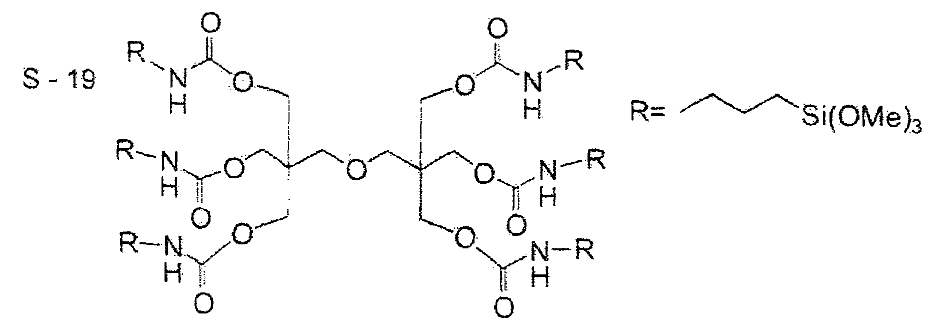

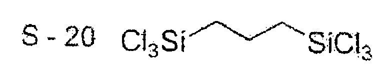

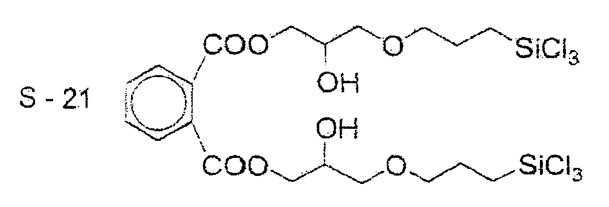

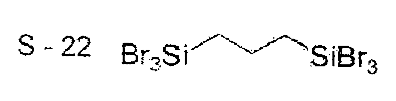

As the compounds having -SiR¹R²R³, appropriately synthesized compounds may be used, however, it is preferable to use commercially available products in view of costs. These compounds are available from Shin-Etsu Chemical Co., Ltd. or Dow Corning Toray Co., Ltd. as silane compounds or silane coupling agents.

In the case of using the compound having -SiR¹R²R³ as the crosslinking agent (C), a polymer having a functional group (for example, a hydroxy group) that can react with this is preferably, used as the binder (B); however, another binder polymer may also be used.

[(2) Compound having plural groups selected from the group consisting of acid anhydride residues and isocyanate groups]

First, (2-1) a compound having plural acid anhydride residues is explained.

The compound having plural acid anhydride residues, which is used in the present invention, means a compound having two or more acid anhydride residues as the crosslinkable groups. Particularly, a compound having two or more carboxylic acid anhydride residues is preferable.

Herein, the term "acid anhydride residue" in the present invention refers to a structure of an acid anhydride produced by dehydration condensation of two acids that exist in the identical molecule.

A tetrabasic acid dianhydride is preferably described as the compound having two or more acid anhydride residues, which is used in the present invention.

Specific examples of the tetrabasic acid dianhydride include aliphatic or aromatic tetracarboxylic dianhydrides such as biphenyltetracarboxylic dianhydride, naphthalenetetracarboxylic dianhydride, diphenyl ether tetracarboxylic dianhydride, butanetetracarboxylic dianhydride, cyclopentanetetracarboxylic dianhydride, pyromellitic dianhydride, benzophenonetetracarboxylic dianhydride, and pyridinetetracarboxylic dianhydride. Further, examples of a compound having three carboxylic acid anhydride residues include mellitic trianhydride and the like.

Specific examples (1) to (28) of the compound having acid anhydride residues, which is preferably used in the present invention, are shown below; however, the present invention is not limited to these examples.

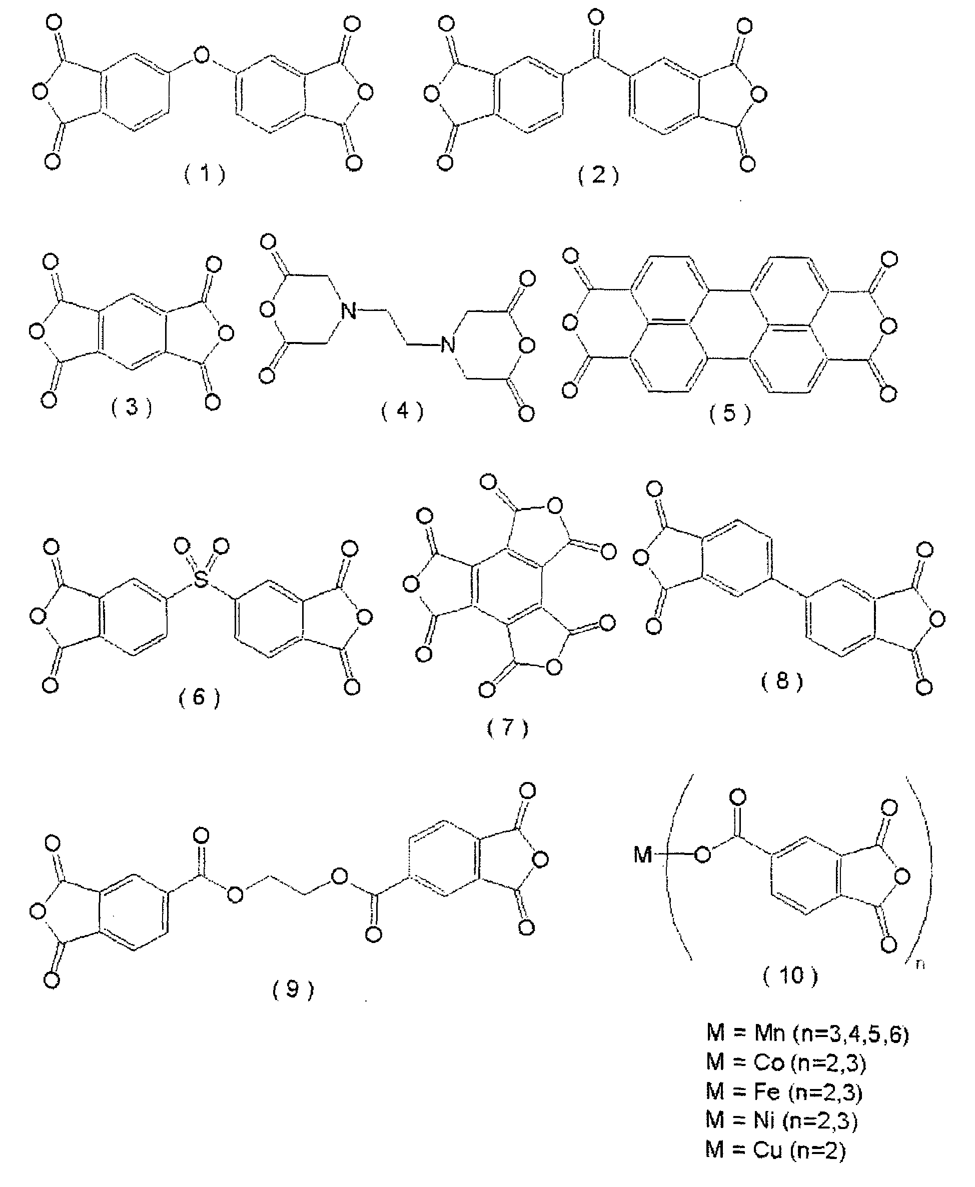

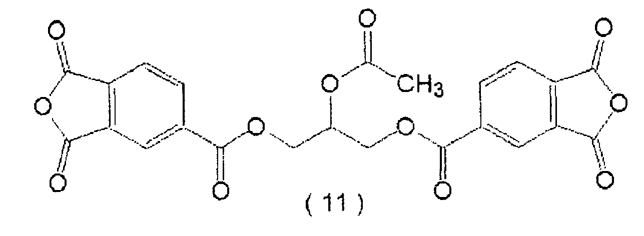

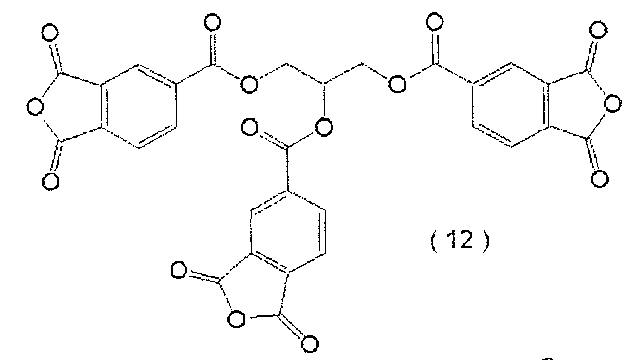

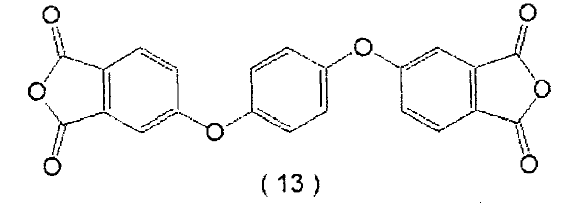

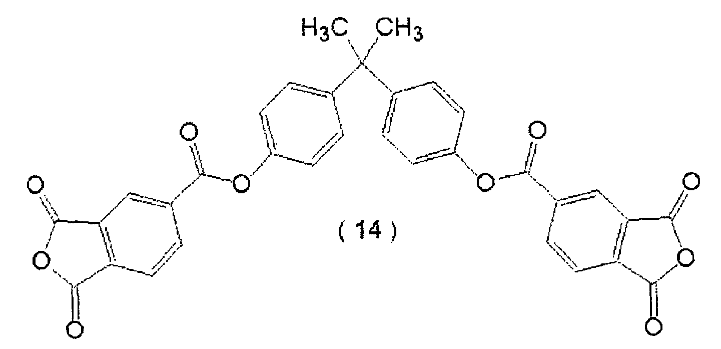

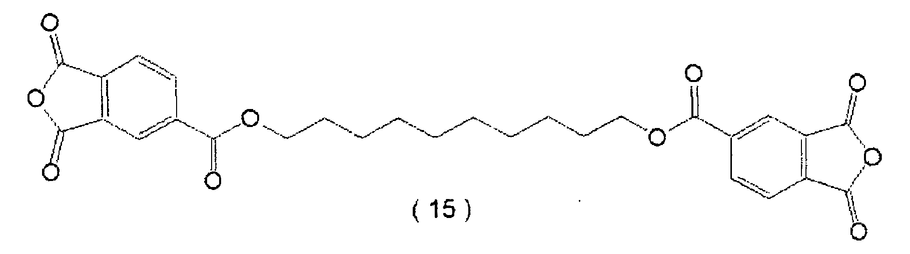

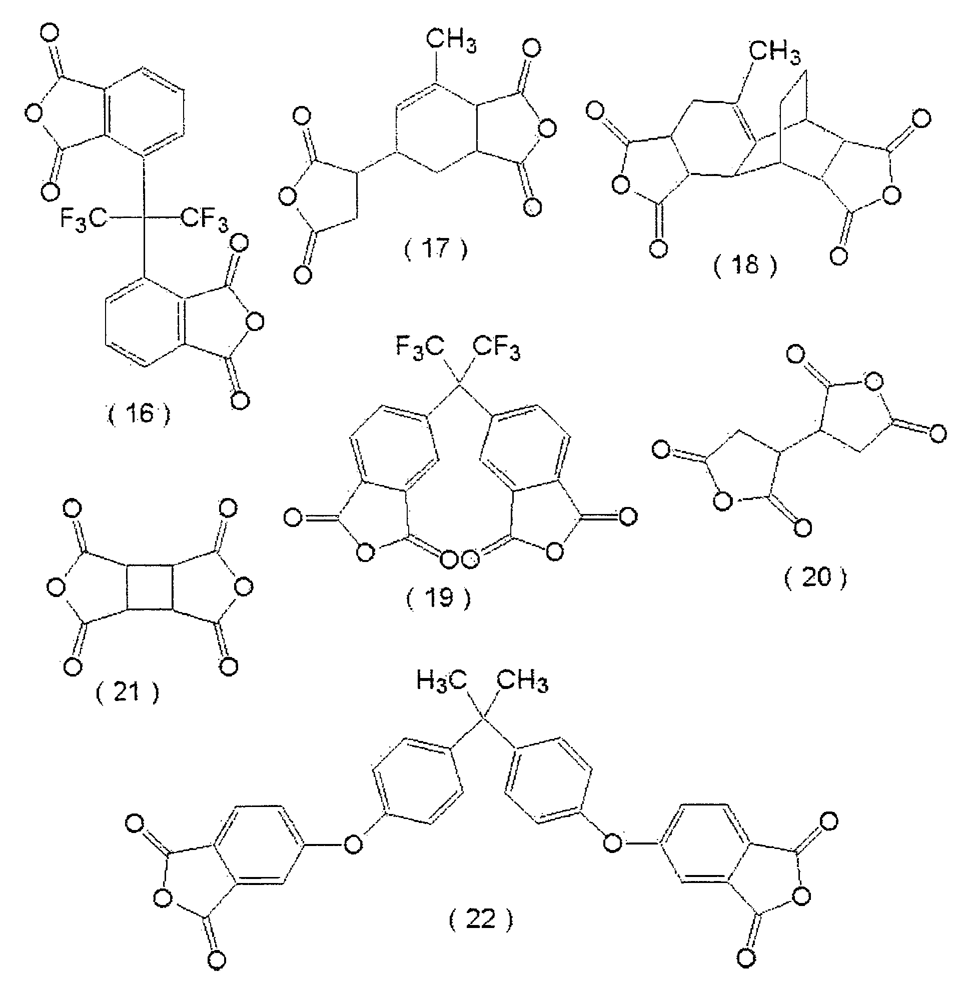

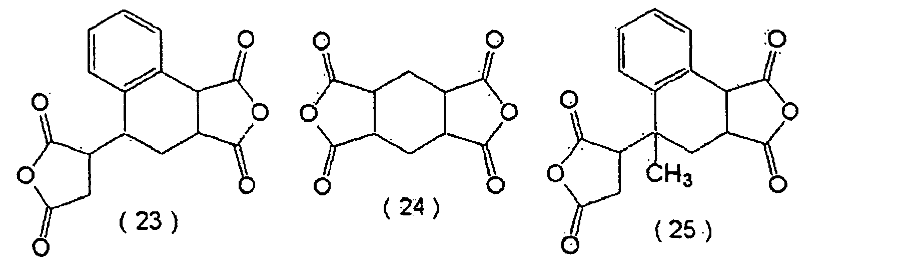

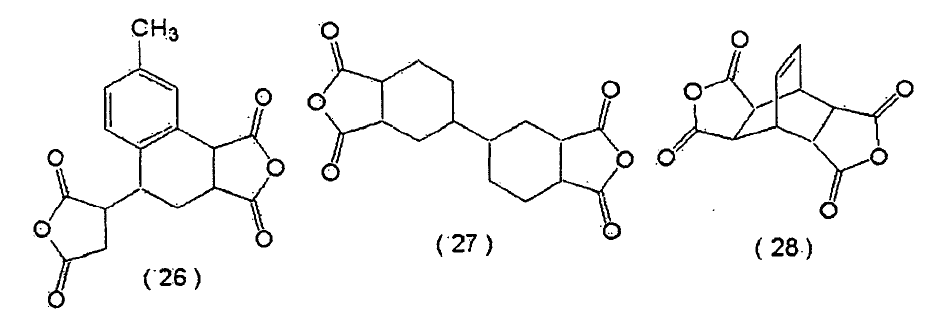

Further, concerning the compound having plural acid anhydride residues which is used in the present invention, examples of commercially available products include RIKACID TMGE-S, RIKACID TMGE-100, RIKACID TMGE-200, RIKACID TMGE-500, RIKACID TMGE-600, and RIKACID TMCA-C (all trade names, manufactured by New Japan Chemical Co., Ltd.).

### (2-2) Compound having plural isocyanate groups

The compound having plural isocyanate groups, which is used in the present invention, means a compound having two or more isocyanate groups as the crosslinkable groups.

The compound having two or more isocyanate groups is not particularly limited as far as the compound has two or more isocyanate groups. Examples thereof include aromatic diisocyanate compounds, aliphatic diisocyanate compounds, alicyclic diisocyanate compounds, isocyanurate compounds, and diisocyanate compounds which are the reaction products of diol and diisocyanate.

A preferable example of the compound having two or more isocyanate groups is a diisocyanate compound represented by the following Formula (I-1).

OCN-X⁰-NCO (I-1)

In Formula (I-1), X⁰ represents a divalent organic group.

The diisocyanate compound represented by the above Formula (I-1) is preferably a diisocyanate compound represented by the following Formula (1-2).

OCN-L¹-NCO (I-2)

In Formula (I-2), L¹ represents a divalent aliphatic or aromatic hydrocarbon group, which may have a substituent. As necessary, L¹ may have another structure or another functional group which does not react with an isocyanate group, for example, one or more of an ester bond, a urethane bond, an amide bond or a ureido group.

Specific examples of the diisocyanate compound represented by the above Formula (I-2) include the following compounds.

Namely, aromatic diisocyanate compounds such as 2,4-tolylene diisocyanate, a dimer of 2,4-tolylene diisocyanate, 2,6-tolylene diisocyanate, p-xylylene diisocyanate, m-xylylene diisocyanate, 4,4'-diphenylmethane diisocyanate, 1,5-naplithylene diisocyanate, and 3,3'-dimethylbiphenyl-4,4'-diisocyanate; aliphatic diisocyanate compounds such as hexamethylene diisocyanate, trimethylhexamethylene diisocyanate, lysine diisocyanate, and dimer acid diisocyanate; alicyclic diisocyanate compounds such as isophorone diisocyanate, 4,4'-methylenebis(cyclohexyl isocyanate), methylcyclohexane-2,4-diisocyanate, methylcyclohexane-2,6-diisocyanate, and 1,3-bis(isocyanatomethyl)cyclohexane; diisocyanate compounds, which are the reaction products of diol and diisocyanate, such as an adduct of 1 mole of 1,3-butylene glycol and 2 mole of tolylene diisocyanate; and the like are described.

Further, a triisocyanate compound can be also used in the present invention. Examples of the triisocyanate compound are shown below; however, the present invention is not limited to these examples.

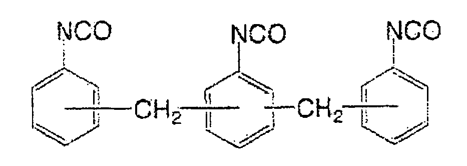

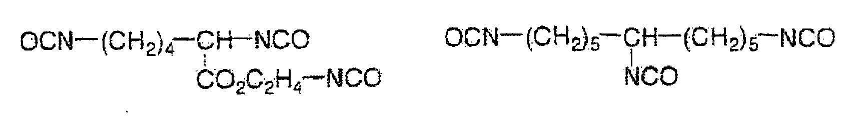

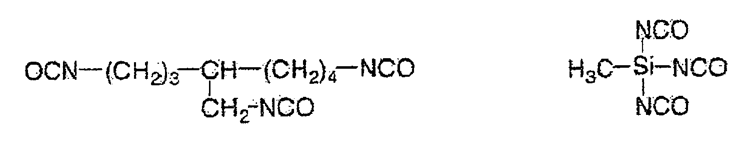

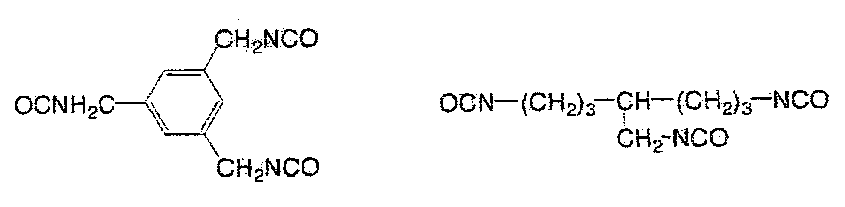

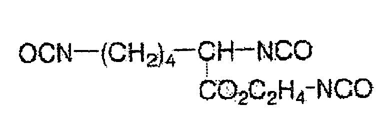

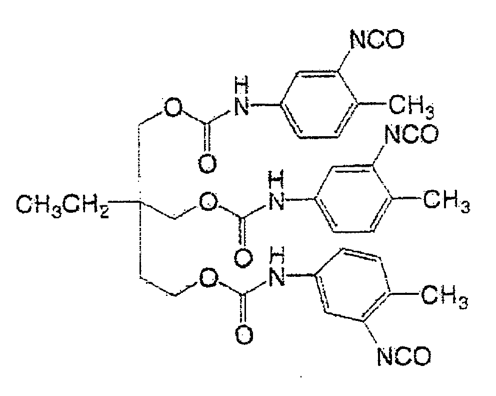

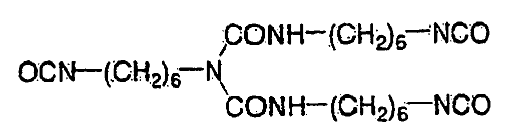

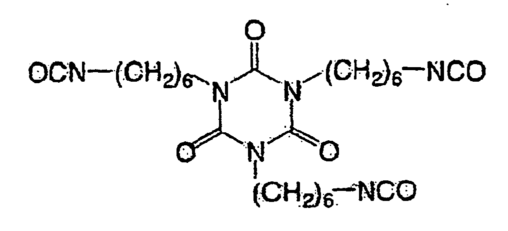

In the case of using, as the crosslinking agent (C), the (2) compound having plural groups selected from the group consisting of acid anhydride residues and isocyanate groups, a polymer having a functional group (for example, a carboxy group, an amino group, or the like) that can react with these groups is preferably used as the binder (B) in view of formation of a crosslinked structure; however, another binder polymer may also be used.

The various compounds as described above may form a crosslinked structure in the relief forming layer by the reaction with the binder (B) described above, may form a crosslinked structure by the reaction between these compounds themselves, or may form a crosslinked structure by both of the two reactions.

The molecular weight of the crosslinking agent is not particularly limited, but the molecular weight of the crosslinking agent is preferably from 50 to 3,000, more preferably from 70 to 2,500, and even more preferably from 100 to 2,000.

The total content of the crosslinking agent (C) in the resin composition of the present invention is preferably from 10% by mass to 60% by mass, and more preferably from 15% by mass to 45% by mass, with respect to the non-volatile components, from the viewpoint of flexibility or brittleness of the crosslinked film.

The resin composition of the present invention may contain the components as described below, in addition to the essential components (A) to (C).

### [Photothermal conversion agent (D)]

The resin composition of the present invention preferably contains a photothermal conversion agent (D).

It is thought that the photothermal conversion agent absorbs the laser light to generate heat, thereby accelerating the thermal decomposition of a cured matter of the resin composition of the present invention. Therefore, it is preferable to select a photothermal conversion agent that absorbs light of the laser wavelength used for engraving.

When a laser (a YAG laser, a semiconductor laser, a fiber laser, a plane emitting laser, or the like), that emits infrared ray having a wavelength of from 700 nm to 1,300 nm, is used for laser engraving as a light source, it is preferable that the resin composition of the present invention contains a photothermal conversion agent that can absorb light having a wavelength of from 700 nm to 1,300 nm.

Various kinds of dyes or pigments may be used as the photothermal conversion agent according to the present invention.

Concerning the dyes which may be used as the photothermal conversion agent, commercially available dyes or known dyes, such as those described in literatures such as "Senryo Binran" (Dye Handbook, edited by The Society of Synthetic Organic Chemistry, Japan, 1970), can be used. Specifically, dyes having a maximum absorption wavelength within a wavelength region of from 700 nm to 1,300 nm are described. Specific examples thereof include azo dyes, metal complex salt azo dyes, pyrazolone azo dyes, naphthoquinone dyes, anthraquinone dyes, phthalocyanine dyes, carbonium dyes, diimmonium compounds, quinoneimine dyes, methine dyes, cyanine dyes, squarylium dyes, pyrylium salts, and metal thiolate complexes. Particularly, cyanine dyes such as a heptamethine cyanine dye, oxonol dyes such as a pentamethine oxonol dye, and phthalocyanine dyes are preferably used. Examples thereof include dyes described in paragraphs [0124] to [0137] of JP-A No. 2008-63554.

Concerning the pigments which may be used as the photothermal conversion agent, commercially available pigments and pigments described in the Color Index (C. I.) Handbook, "Handbook of New Pigments" (edited by JAPAN Association of Pigment Technology, 1977), "New Pigment Application Technology" (published by CMC, Inc., 1986), and "Printing Ink Technology" (published by CMC, Inc., 1984) can be utilized.

Examples of the kinds of pigments include black pigments, yellow pigments, orange pigments, brown pigments, red pigments, purple pigments, blue pigments, green pigments, fluorescent pigments, metal powder pigments, and polymer-bonded dyes. Specifically, an insoluble azo pigment, an azo lake pigment, a condensed azo pigment, a chelate azo pigment, a phthalocyanine pigment, an anthraquinone pigment, a perylene pigment, a perinone pigment, a thioindigo pigment, a quinacridone pigment, a dioxazine pigment, an isoindolinone pigment, a quinophthalone pigment, a dyed lake pigment, an azine pigment, a nitroso pigment, a nitro pigment, a natural pigment, a fluorescent pigment, inorganic pigment, carbon black, or the like may be used. Among these pigments, carbon black is preferable.

Any kind of carbon black may be used as far as the carbon black has stable dispersibility or the like in the composition. The carbon black may be a product classified according to ASTM (American Society for Testing and Materials) standard or may be a product used for various applications (for example, for coloring, for rubber making, or for batteries). Examples of the carbon black include furnace black, thermal black, channel black, lamp black, and acetylene black. Black colorants such as carbon black may be used in the form of color chips or color pastes, in which the colorant has been dispersed in advance in nitrocellulose, a binder, or the like using, as necessary, a dispersant to facilitate the dispersion. Such chips or pastes can be easily obtained as commercially available products.

In the present invention, the range of carbon black that can be used is wide including a carbon black having a relatively small specific surface area and a relatively low DBP (dibutylphthalate) absorption as well as a micronized carbon black having a relatively large specific surface area. Preferable examples of the carbon black include PRINTEX (registered trademark) U, PRINTER (registered trademark) A and SPEZIALSCHWARZ (registered trademark) 4 (all manufactured by Degussa GmbH).

The carbon black which can be used in the present invention is preferably a conductive carbon black having a specific surface area of at least 150 *m²*/*g* and a DBP number of at least 150 mL/100, from the viewpoint of enhancing the engraving sensitivity by efficiently transmitting the heat, that is generated by photothermal conversion, to the polymer that exists at the periphery.

The specific surface area is preferably at least 250 m²/g, and particularly preferably at least 500 m²/g. The DBP number is preferably at least 200 mL/100g, and particularly preferably at least 250 mL/100g. The carbon black described above may be an acidic carbon black or may be a basic carbon black. The carbon black is preferably a basic carbon black. A mixture of carbon blacks different from each other may be also used as a matter of course.

A suitable conductive carbon black having a specific surface area reaching about 1,500 m²/g and a DBP number reaching about 500 mL/100g is commercially available. Examples of such a commercially available product include KETJENBLACK (registered trademark) EC300J and KETJENBLACK (registered trademark) EC600J (all from Akzo Nobel); PRINTEX (registered trademark) XE (manufactured by Degussa GmbH); BLACK PEARLS (registered trademark) 2000 (manufactured by Cabot Corporation); and KETJENBLACK (trade name, manufactured by Lion Corporation).

The content of the photothermal conversion agent in the resin composition of the present invention greatly differs depending on the inherent molecular absorption coefficient of the molecule. However, the content of the photothermal conversion agent is preferably from 0.01 % by mass to 20% by mass, more preferably from 0.05% by mass to 10% by mass, and even more preferably from 0.1 % by mass to 5% by mass, with respect to the total mass of solids in the resin composition.

### [[Other components]

### [Catalyst for alcohol exchange reaction]

When the above-described "compound having -SiR¹R²R³" or the like is used as the crosslinking agent (C) in the resin composition of the present invention, it is preferable that the resin composition further includes a catalyst for alcohol exchange reaction for the purpose of accelerating the reaction between the crosslinking agent (C) and the binder (B).

As the catalyst for alcohol exchange reaction, catalysts for reaction, which are generally used, may be employed without limitation.

Acid or basic catalysts and metal complex catalysts, which are representative catalysts for alcohol exchange reaction, are explained in the order below.

### -Acid or basic catalyst-

As the catalyst, an acid or basic compound is used as it is, or in the sate of being dissolved in a solvent such as water or an organic solvent (hereinafter, referred to as "acid catalyst" or "basic catalyst", respectively). The concentration of the catalyst when dissolved in a solvent is not particularly limited, and the concentration may be appropriately selected according to the characteristics of the acid or basic compound used, the desired content of the catalyst, and the like.

The kind of the acid catalyst or basic catalyst is not particularly limited. Specific examples of the acid catalyst include hydrogen halides such as hydrochloric acid; nitric acid; sulfuric acid; sulfurous acid; hydrogen sulfide; perchloric acid; hydrogen peroxide; carbonic acid; carboxylic acids such as formic acid and acetic acid; a substituted carboxylic acid in which R in the structural formula represented by RCOOH is substituted by another atom or a substituent; sulfonic acids such as benzenesulfonic acid; and phosphoric acid. Specific examples of the basic catalyst include ammonia base such as aqueous ammonia, and amines such as ethylamine, aniline, and 1,8-diazabicyclo[5,4,0]undec-7-ene (DBU). From the viewpoint of promptly progressing the alcohol exchange reaction in the layer, methanesulfonic acid, p-toluenesulfonic acid, pyridinium p-toluenesulfonate, phosphoric acid, phosphonic acid, and acetic acid are preferable, and methanesulfonic acid, p-toluenesulfonic acid, and phosphoric acid are particularly preferable.

### -Metal complex catalyst-

The metal complex catalyst used as the catalyst for alcohol exchange reaction in the present invention is preferably configured to include a metal element selected from the group consisting of elements belonging to Group 2, Group 4, Group 5, and Group 13 of the periodic table; and an oxo or hydroxyoxygen compound selected from the group consisting of β-diketone (preferably, acetyl acetone or the like), a keto ester, hydroxycarboxylic acid and an ester thereof, amino alcohol, and an enolic active hydrogen compound.

Further, among the constituent metal elements, elements belonging to Group 2 such as Mg, Ca, St, and Ba, elements belonging to Group 4 such as Ti and Zr, elements belonging to Group 5 such as V, Nb, and Ta, and elements belonging to Group 13 such as A1 and Ga are preferable, and these elements each form a complex having an excellent catalytic effect. Among them, complexes obtained from Zr, Al, or Ti have excellent properties, which are preferable. Particularly preferable examples include ethyl orthotitanate and the like.

These complexes have excellent stability in an aqueous coating liquid and exert an excellent acceleration effect of gelation in sol-gel reaction at the time of drying by heating. Above all, ethylacetoacetate aluminum diisopropylate, aluminum tris(ethylacetoacetate), a di(acetylacetonato) titanium complex salt, and zirconium tris(ethylacetoacetate) are particularly preferable.

In the resin composition of the present invention, the catalysts for alcohol exchange reaction may be used alone or in a combination of two or more of them. The content of the catalyst for alcohol exchange reaction in the resin composition is preferably from 0.01% by mass to 20% by mass with respect to the binder (B) (hydroxy group-containing polymer), and more preferably from 0.1% by mass to 10% by mass.

### [Other additives]

The resin composition of the present invention preferably contains a plasticizer.

The plasticizer has a function of softening the film (relief forming layer) which is formed from the resin composition of the present invention, and should have a good compatibility with the binder (B).

Examples of the plasticizer that is preferably used include dioctyl phthalate, didodecyl phthalate, polyethylene glycols, and polypropylene glycol (monool type or diol type).

Further, it is more preferable to add nitrocellulose or a substance having high heat conductivity to the resin composition of the present invention as an additive for enhancing the engraving sensitivity. Since nitrocellulose is a self-reactive compound, it itself generates heat and assists thermal decomposition of the coexisting binder (B) such as a hydrophilic polymer or the like at the time of laser engraving, and it is thought that, as a result, the engraving sensitivity is enhanced. A substance having high heat conductivity may be added for the purpose of assisting heat transfer, and examples thereof include inorganic compounds such as metal particles and organic compounds such as a conductive polymer. Preferable examples of the metal particles include fine particles of gold, fine particles of silver, and fine particles of cupper, each of which has a particle diameter of from micrometer order to several-nanometer order. As the conductive polymer, a conjugate polymer is particularly preferable, and specific examples thereof include polyaniline and polythiophene.

Further, a colorant such as a dye or a pigment may be added for the purpose of coloring the resin composition of the present invention. By the coloring, properties such as visibility of the image area or suitability for an image density meter can be improved.

Further, known additives such as a filler and the like may be added for the purpose of improving physical properties of the cured film of the resin composition of the present invention.

Furthermore, the resin composition of the present invention may contain a solvent.

As the solvent, low molecular weight alcohols which easily volatilize (for example, methanol, ethanol, n-propanol, isopropanol, and propylene glycol monomethyl ether) are preferably described. It should be noted that the amount of solids in the resin composition is an amount which is obtained by excluding the amount of volatile components such as a solvent.

### <Relief printing plate precursor for laser engraving>

A first exemplary embodiment of the relief printing plate precursor for laser engraving of the present invention is an embodiment having a relief forming layer including the resin composition for laser engraving of the present invention.

Further, a second exemplary embodiment of the relief printing plate precursor for laser engraving of the present invention has a crosslinked relief forming layer obtained by crosslinking a relief forming layer including the resin composition for laser engraving of the present invention.

As is clear from the above two exemplary embodiments, in the "relief printing plate precursor for laser engraving (hereinafter, simply referred to as "relief printing plate precursor")", the relief forming layer, which includes the resin composition for laser engraving and has a crosslinking property, may has two states including the state before being crosslinked and the state of being cured by light or heat.

In the present invention, the term "relief forming layer" means a layer which is in the state before being crosslinked, namely, a layer including the resin composition of the present invention and, if necessary, drying may be conducted.

Further, in the present invention, the term "crosslinked relief forming layer" means a layer obtained by crosslinking the relief forming layer. The above crosslinking is preferably performed using heat and/or light.

A "relief printing plate" is produced by laser engraving a printing plate precursor for laser engraving having a crosslinked relief forming layer.

The term "relief layer" used in the present invention means a layer, which has been engraved by using a laser, in the relief printing plate, namely, the crosslinked relief forming layer after laser engraving.

The relief forming layer is preferably provided on a support.

The relief printing plate precursor for laser engraving may further have an adhesive layer between the support and the relief forming layer, and a slip coat layer and a protective film on the relief forming layer, if necessary.

### [Relief forming layer]

The relief forming layer is a layer including the resin composition of the present invention, and is preferably a layer that is cured by at least one of light or heat, namely, a layer having a crosslinking property.

The method for making a relief printing plate using the relief printing plate precursor of the present invention is preferably a method of making a relief printing plate, including crosslinking the relief forming layer, and then forming a relief, layer by laser engraving. By the crosslinking of the relief forming layer, abrasion of the relief forming layer at the time of printing may be prevented, and a relief printing plate having a sharp relief may be obtained after the laser engraving.

It should be noted that the relief forming layer can be formed by using the resin composition of the present invention and by molding the resin composition into the shape of a sheet or a sleeve.

### [Support]

The support which can be used in the relief printing plate precursor of the present invention is explained.

The material which is used for the support of the relief printing plate precursor of the present invention is not particularly limited, and a material having a high dimensional stability is preferably used. Specific examples of the material include metals such as steel, stainless steel, or aluminum; plastic resins such as polyester (for example, polyethylene terephthalate (PET), polybutylene terephthalate (PBT), or polyacrylonitrile (PAN)) or polyvinyl chloride; synthetic rubbers such as a styrene-butadiene rubber; and plastic resins (for example, an epoxy resin or a phenol resin) reinforced with glass fiber. A PET film or a steel substrate is preferably used as the support. The form of the support is determined considering whether the relief forming layer is formed in a sheet shape or in a sleeve shape.

Further, in the relief printing plate precursor which is prepared by coating a crosslinkable resin composition and then curing the resin composition by applying heat and/or light or the like from the rear face (which is the opposite surface from the surface in which the laser engraving is conducted; including those in a cylindrical shape), the rear face side of the cured resin composition for laser engraving functions as a support, so that a support is not always essential.

### [Adhesive layer]

An adhesive layer may be provided between the relief forming layer and the support for the purpose of reinforcing the adhesive force between the two layers. Examples of the material (adhesive) which can be used in the adhesive layer include those described in "Handbook of Adhesives", 2nd edition, edited by 1. Skeist (1977).

### [Protective film and slip coat layer]

A protective film may be provided on the surface of the relief forming layer or on the surface of the crosslinked relief forming layer, for the purpose of preventing scratches or dents from occurring at the surface of the relief forming layer or at the surface of the crosslinked relief forming layer. The thickness of the protective film is preferably from 25 µm to 500 µm, and more preferably from 50 µm to 200 µm.

Examples of the protective film which can be used include polyester films such as PET and polyolefin films such as PE (polyethylene) or PP (polypropylene). The surface of the film may be matted. It is preferable that the protective film is peelable.

When the protective film is unpeelable or, to the contrary, when the protective film hardly adheres to the relief forming layer, a slip coat layer may be provided between the protective film and the relief forming layer. The material which is used in the slip coat layer preferably includes, as a main component, a resin which can be dissolved or dispersed in water and has low tackiness. Examples thereof include polyvinyl alcohol, polyvinyl acetate, partially saponified polyvinyl alcohol, hydroxyalkyl cellulose, alkyl cellulose, and a polyamide resin.

### <Method for producing relief printing plate precursor for laser engraving>

Next, the method for producing the relief printing plate precursor for laser engraving of the present invention is explained.

The method for producing the relief printing plate precursor of the present invention is characterized in that it includes (i) a layer forming process of forming a relief forming layer including the resin composition of the present invention and (ii) a crosslinking process of crosslinking the relief forming layer using heat and/or light to form a crosslinked relief forming layer.

The (i) layer forming process and the (ii) crosslinking process are explained below.

### [(i) Layer forming process]

The method for producing the relief printing plate precursor of the present invention includes, firstly, a layer forming process of forming a relief forming layer including the resin composition of the present invention.

Preferable examples of the method of forming a relief forming layer include: a method in which a coating liquid for forming a relief forming layer is prepared using the resin composition of the present invention, then, as needs arise, the solvent is removed from the coating liquid for forming a relief forming layer, and then the resulting coating liquid is subjected to melt extrusion on a support; and a method in which a coating liquid for forming a relief forming layer is prepared using the resin composition of the present invention, then the coating liquid for forming a relief forming layer is cast on a support, and then the solvent is removed from the cast coating liquid by drying using an oven.

The coating liquid for forming a relief forming layer can be produced by, for example, dissolving the above-described phenol derivative (A), crosslinking agent (C), binder (B) and, as needs arise, the above-described photothermal conversion agent (D) and plasticizer in an appropriate solvent. Almost all the solvent components are required to be removed in the process of producing the relief printing plate precursor. Therefore, it is preferable to use a low molecular weight alcohol which easily volatilizes (for example, methanol, ethanol, n-propanol, isopropanol, or propylene glycol monomethyl ether) or the like as the solvent, and to suppress the total addition amount of the solvent to be as small as possible by adjusting the temperature or the like.

The thickness of the relief forming layer in the relief printing plate precursor for laser engraving is, before and after crosslinking, preferably from 0.05 mm to 10 mm, more preferably from 0.05 mm to 7 mm, and even more preferably from 0.05 mm to 3 mm.

### [(ii) Crosslinking process]

Subsequently, the method for producing the relief printing plate precursor of the present invention includes a crosslinking process of crosslinking the relief forming layer formed in the above (i) layer forming process by using heat and/or light to form a crosslinked relief forming layer.

Here, the meaning of the term "crosslinking" used in the present invention is not particularly limited as far as the term refers to a reaction by which a relief forming layer is cured by applying heat and/or light. A crosslinked structure may be formed in the relief forming layer by the reaction between the crosslinking agent (C) and the binder (B), a crosslinked structure may be formed by the reaction between the crosslinking agents themselves, or a crosslinked structure may be formed by both of the two reactions.

The light which is used for crosslinking the relief forming layer is preferably irradiated on the entire surface of the relief forming layer.

Examples of the light include visible light, an ultraviolet ray, and an electron beam. An ultraviolet ray is most preferable. When the side of the relief forming layer facing the support is regarded as the rear face thereof, light may be irradiated only on the front face thereof. However, it is preferable that light is also irradiated from the rear face, when the support is a transparent film that transmits the light. In the case where a protective film is present, the irradiation from the front face may be performed while the protective film is provided as it is, or the irradiation from the front face may be performed after the protective film is peeled off. When there is concern that the crosslinking reaction is inhibited in the presence of oxygen, the irradiation of light may be performed after the relief forming layer is covered with a vinyl chloride sheet and evacuated.

As the heating method for performing the crosslinking using heat, a method of heating the printing plate precursor in a hot air oven or a far infrared oven for a predetermined time, and a method of bringing the printing plate precursor into contact with a heated roll for a predetermined time are described.

As the crosslinking method of the relief forming layer in the crosslinking process, the crosslinking by heat is preferable from the viewpoint that the relief forming layer can be cured (crosslinked) uniformly from the surface to the inside of the relief forming layer.

By crosslinking the relief forming layer, advantages are obtained, firstly, in that the relief formed by the laser engraving becomes sharp, and secondly, tackiness of the engraving scraps which are generated upon laser engraving is suppressed.

### [Other Processes]

The method for producing the relief printing plate precursor of the present invention may contain, if necessary, a process of laminating a protective film on the relief forming layer. This lamination may be carried out by pressing a protective film to the relief forming layer using a heated calender roll or the like, or by adhering a protective film onto the relief forming layer that has a small amount of solvent impregnated in the surface thereof. When the protective film is used, a method in which the relief forming layer is layered on the protective film and then the support is laminated thereon may be adopted.

Further, the method for producing the relief printing plate precursor of the present invention may contain, if necessary, a process of forming an adhesive layer between the support and the relief forming layer. In the case of providing the adhesive layer, a support having an adhesive layer coated thereon may be used.

Furthermore, the method for producing the relief printing plate precursor of the present invention may contain, if necessary, a process of forming a slip coat layer between the relief forming layer and the protective film. In the case of providing the slip coat layer, a protective film having a slip coat layer coated thereon may be used.

### <Relief printing plate and method for making the same>

The method for making a relief printing plate of the present invention is characterized in that it includes (i) a layer forming process of forming a relief forming layer including the resin composition of the present invention, (ii) a crosslinking process of crosslinking the relief forming layer using heat and/or light to form a crosslinked relief forming layer, and (iii) an engraving process of laser engraving the crosslinked relief forming layer.

The relief printing plate of the present invention is a relief printing plate which has a relief layer obtained by crosslinking the relief forming layer including the resin composition of the present invention and laser engraving the obtained crosslinked relief forming layer, and is a relief printing plate produced by the method for making a relief printing plate of the present invention.

The (i) layer forming process and the (ii) crosslinking process in the method for making a relief printing plate of the present invention each have the same meaning as the (i) layer forming process and the (ii) crosslinking process in the method for producing the relief printing plate precursor of the present invention, respectively, and preferable ranges are also the same. Therefore, only the (iii) engraving process is described in detail below.

### [(iii) Engraving process]

The method for making a relief printing plate of the present invention includes an engraving process of laser engraving the crosslinked relief forming layer formed in the (ii) crosslinking process. Namely, the engraving process is a process of forming a relief layer by laser engraving the relief printing plate precursor of the present invention, which has a crosslinked relief forming layer crosslinked in the (ii) crosslinking process. Specifically, it is preferred to form a relief layer by performing engraving with irradiation of a laser beam, that corresponds to a desired image, with respect to the crosslinked relief forming layer which has been crosslinked. More preferably, a process in which scanning irradiation is carried out with respect to the crosslinked relief forming layer while controlling a laser head by a computer in accordance with digital data of a desired image is described.

In the engraving process, an infrared laser is preferably used. When an infrared laser is irradiated, molecules in the crosslinked relief forming layer begin to move through their molecular vibration, and heat is generated. When a high power laser such as a carbon dioxide gas laser or a YAG laser is used as the infrared laser, a large amount of heat is generated at the portion where the laser is irradiated, and the molecules in the crosslinked relief forming layer are broken or ionized, whereby the molecules are selectively removed, that is, engraving is done. The laser engraving is advantageous in that it can three-dimensionally control the structure. For example, a portion where fine halftone dots are printed may be engraved shallowly or with shoulders, so that the relief is prevented from falling down by the action of printing pressure: and a portion of a groove where a fine outline character is printed may be deeply engraved so that the groove is not easily filled with ink and that the outline characters may be prevented from being collapsed.

In particular, when an infrared laser that corresponds to the absorption wavelength of the photothermal conversion agent is used for engraving, the crosslinked relief forming layer may be selectively removed with higher sensitivity and a relief layer having sharp images is obtained.

As the infrared laser used in the engraving process, a carbon dioxide gas laser or a semiconductor laser is preferable in view of productivity, costs, and the like. Particularly, a semiconductor infrared laser with fiber is preferably used. In general, semiconductor lasers have a higher laser oscillation efficiency, are less expensive, and can be designed to be more compact, as compared with CO₂ lasers. Moreover, due to their small size, the semiconductor lasers can be easily arranged in an array. Further, the shape of the laser beam can be controlled by processing with the fiber.

As the semiconductor laser, any of semiconductor lasers that emit light having a wavelength in a range of from 700 nm to 1,300 nm can be utilized. A semiconductor laser that emits light having a wavelength of from 800 nm to 1,200 nm is preferable, a semiconductor laser that emits light having a wavelength of from 860 nm to 1,200 mn is more preferable, and a semiconductor laser that emits light having a wavelength of from 900 nm to 1,100 nm is particularly preferable.

An embodiment of a plate making apparatus 11 provided with a semiconductor laser recording device 10 equipped with fiber, which can be preferably applied to the (iii) engraving process in the relief printing plate of the present invention is hereinafter explained, with regard to the configuration of the plate making apparatus by referring to Fig. 1.

The plate making apparatus 11 provided with the semiconductor laser recording device 10 equipped with fiber, which can be applied to the present invention, engraves (records) a two-dimensional image on the relief printing plate precursor F at a high speed in the following manner. Namely, the plate making apparatus 11 drives a drum 50 which has, on its outer circumferential surface, a relief printing plate precursor F (recording medium) of the present invention, to rotate in the main scanning direction and, at the same time, operates an exposure head 30 so that it scans the drum in the sub-scanning direction, which crosses the main scanning direction at right angles, at a predetermined pitch, while simultaneously emitting plural laser beams corresponding to image data of an image to be engraved (recorded) onto the relief printing plate precursor F. In the case of engraving a narrow region (precise engraving for forming fine lines, halftone dots, or the like), the relief printing plate precursor F is engraved shallowly; and in the case of engraving a large region, the relief printing plate precursor F is engraved deeply.

As shown in Fig. 1, the plate making apparatus 11 is configured to include the drum 50 which is equipped with the relief printing plate precursor F, on which an image is to be recorded through being engraved by a laser beam, and is driven to rotate in the direction indicated by an arrow R in Fig. 1 so that the relief printing plate precursor F is moved in the main scanning direction; and the laser recording device 10. The laser recording device 10 is configured to include a light source unit 20 that generates plural laser beams; the exposure head 30 that exposes the relief printing plate precursor F to the plural laser beams generated by the light source unit 20; and an exposure head moving unit 40 that moves the exposure head 30 along the sub-scanning direction.

The light source unit 20 is equipped with semiconductor lasers 21A and 21B, each of which has a broad area semiconductor laser to which an end of each of optical fibers 22A and 22B are individually coupled; light source substrates 24A and 24B, each of which has the semiconductor laser 21A or 21B arranged on the surface thereof; adaptor substrates 23A and 23B, each of which is vertically attached to an end of the light source substrate 24A or 24B and is provided with plural adaptors (the number of the adaptors is the same as the number of semiconductor lasers 21A and 21B) of SC-type (sensor connector type) light connectors 25A and 25B; and LD (laser diode) driver substrates 27A and 27B, each of which is horizontally attached to another end of the light source substrate 24A or 24B and is provided with an LD driver circuit that drives the semiconductor lasers 21A and 21 B corresponding to the image data of the image to be engrave (recorded) on the relief printing plate precursor F.

The exposure head 30 is equipped with a fiber array unit 300 by which laser beams emitted from the plural semiconductor lasers 21A and 21B are gathered to be emitted together. Laser beams emitted from each of the semiconductor lasers 21A and 21B are sent to the fiber array unit 300 by plural optical fibers 70A and 70B, each of which is connected to the SC-type light connector 25A or 25B connected to the adaptor substrate 23A or 23B.

As shown in Fig. 1. the exposure head 30 has a collimator lens 32, an opening member 33, and an image forming lens 34 in this order from the side of the fiber array unit 300. Note that, the opening member 33 is arranged such that its opening is located at the position of a far field, when looked from the side of the fiber array unit 300. Thus, an equivalent effect of light amount limitation can be provided to all of the laser beams emitted from optical fiber terminals of the plural optical fibers 70A and 70B in the fiber array unit 300.

By the use of the image forming means that is configured to include the collimator lens 32 and the image forming lens 34, the laser beams form an image in the vicinity of the exposure face (surface) FA of the relief printing plate precursor F.

Since it is possible to change the shape of the laser beam of the semiconductor laser equipped with fiber, it is preferable in the present invention that the beam diameter on the exposure face (surface of the relief forming layer) FA is controlled to be within a range of from 10 µm to 80 µm, by setting the image forming position P in a range of from the exposure face FA to the inner side (the leaser beam progressing side), in view of performing engraving with high efficiency, realizing good reproducibility of fine lines, and the like.

The exposure head moving unit 40 is equipped with a ball screw 41 and two rails 42, which are arranged so that their longitudinal directions align along the sub-scanning direction. A pedestal unit 310 provided with the exposure head 30 can be moved in the sub-scanning direction in the state of being guided by the rails 42, by operating a sub-scanning motor 43 that drives to rotate the ball screw 41. Further, the drum 50 can be rotated in the direction indicated by an arrow R in Fig. 1 when a main scanning motor (not shown) is operated, whereby the main scanning is performed.

Concerning the control of the shape to be engraved, it is also possible to change the shape of the engraved region by changing the amount of energy supplied to the laser without changing the shape of the beam of the semiconductor laser equipped with fiber.

Specifically, a method of controlling by changing the output power of the semiconductor laser and a method of controlling by changing the irradiation time for laser irradiation are described.

### [Other processes]

The method for making the relief printing plate of the present invention may further include, in addition to the (iii) engraving process, the following (iv) rinsing process, (v) drying process, and/or (vi) post-crosslinking process, if necessary.
(iv) Rinsing process: a process in which the engraved surface, namely, the surface of the relief forming layer after engraving, is rinsed using water or a liquid including water as a main component.
(v) Drying process: a process in which the engraved relief layer is dried.
(iv) Post-crosslinking process: a process in which energy is applied to the relief layer after engraving to further crosslink the relief layer.

### [(iv) Rinsing process]

When engraving scraps adhere to the engraved surface, a rinsing process, in which the engraved surface is rinsed using water or a liquid including water as a main component to wash away the engraving scraps, may be added. Examples of a rinsing method include a method of washing with tapwater, a method of spraying high pressure water, and a method of brush rubbing the engraved surface, mainly in the presence of water, using a batch type or conveyor type brush washout machine known as a developing apparatus for photosensitive resin letterpress plates. When the slime of engraving scraps is not removed, a rinsing liquid with a surfactant added thereto may be used.

The rinsing liquid is not particularly limited, but an alkali treatment liquid is preferably used.

As the alkali treatment liquid, an aqueous solution having pH of higher than 7 is preferably used. It should be noted that an aqueous solution means a solution in which the solvent is water or a liquid including water as a main component.

The pH of the rinsing liquid is preferably 9 or higher, more preferably 10 or higher, and even more preferably 11 or higher. Further, the pH of the rinsing liquid is preferably 14 or lower, more preferably 13 or lower, and even more preferably 12.5 or lower.

When the pH of the rinsing liquid is lower than 7, sufficient rinsability (washability) cannot be obtained. When the pH is 12.5 or lower, handling is easy, which is particularly preferable.

In order to adjust the pH of the rinsing liquid to be within the above range, an acid (an acid compound) and a base (a basic compound) may be appropriately used to adjust the pH, and there is no particular limitation on the acid and base used.

The basic compound used for adjusting the pH is not particularly limited, and known basic compounds may be used. An inorganic basic compound is preferable, an alkali metal salt compound and an alkaline earth metal salt compound are more preferable, and an alkali metal hydroxide is even more preferable.

Examples of the basic compound include inorganic alkali salts such as sodium hydroxide, ammonium hydroxide, potassium hydroxide, lithium hydroxide, sodium silicate, potassium silicate, trisodium phosphate, tripotassium phosphate, triammonium phosphate, disodium phosphate, dipotassium phosphate, diammonium phosphate, sodium carbonate, potassium carbonate, ammonium carbonate, sodium hydrogencarbonate, potassium hydrogencarbonate, ammonium hydrogencarbonate, sodium borate, potassium borate, and ammonium borate.

In the case of using an acid for adjusting the pH, it is preferable to use an inorganic acid. Examples thereof include hydrochloric acid, sulfuric acid, phosphoric acid, and nitric acid.

Further, it is preferable that the rinsing liquid contains a surfactant.

The surfactant is not particularly limited, and known surfactants may be used. Examples of the surfactant which can be used in the rinsing liquid include an anionic surfactant, a cationic surfactant, an amphoteric surfactant, and a nonionic surfactant.

Examples of the anionic surfactant include a fatty acid salt, an abietic acid salt, a hydroxyalkanesulfonic acid salt, an alkanesulfonic acid salt, an α-olefinsulfonic acid salt, a dialkylsulfosuccinic acid salt, an alkyldiphenyl ether disulfonic acid salt, a straight chain alkylbenzenesulfonic acid salt, a branched chain alkylbenzenesulfonic acid salt, an alkylnaphthalenesulfonic acid salt, an alkylphenoxy polyoxyethylene propylsulfonic acid salt, a polyoxyethylene alkylsulfophenyl ether salt, an N-methyl-N-oleyltaurine sodium salt, an N-alkylsulfosuccinic acid monoamide disodium salt, a petroleum sulfonic acid salt, a sulfated castor oil, a sulfated beef tallow oil, a sulfuric acid ester salt of a fatty acid alkyl ester, an alkylsulfuric acid ester salt, a polyoxyethylene alkyl ether sulfonic acid ester salt, a fatty acid monoglyceride sulfuric acid ester salt, a polyoxyethylene alkylphenyl ether sulfuric acid ester salt, a polyoxyethylene styrylphenyl ether sulfuric acid ester salt, an alkylphosphoric acid ester salt, a polyoxyethylene alkyl ether phosphoric acid ester salt, a polyoxyethylene alkylphenyl ether phosphoric acid ester salt, a partially saponified product of a styrene-maleic anhydride copolymer, a partially saponified product of an olefin-maleic anhydride copolymer, and a naphthalenesulfonic acid salt-formalin condensate.

Examples of the cationic surfactant include an alkylamine salt and a quaternary ammonium salt.

Examples of the nonionic surfactant include a polyoxyethylene alkyl ether, a polyoxyethylene alkylphenyl ether, polyoxyethylene polystyrylphenyl ether, polyoxyethylene polyoxypropylene alkyl ether, a glycerin fatty acid partial ester, a sorbitan fatty acid partial ester, a pentaerythritol fatty acid partial ester, propylene glycol monofatty acid ester, a sucrose fatty acid partial ester, a polyoxyethylene sorbitan fatty acid partial ester, a polyoxyethylene sorbitol fatty acid partial ester, a polyethylene glycol fatty acid ester, a polyglycerin fatty acid partial ester, a fatty acid diethanolamide, an N,N-bis-2-hydroxyalkylamine, polyoxyethylene alkylamine, triethanolamine fatty acid ester, trialkylamine oxide, polypropylene glycol having a molecular weight of from 200 to 5000, trimethylolpropane, a polyoxyethylene or polyoxypropylene adduct of glycerin or sorbitol, and an acetylene glycol compound.

Examples of the amphoteric surfactant include a carboxy betaine compound, a sulfo betaine compound, a phospho betaine compound, an amine oxide compound, and a phosphine oxide compound.

Similarly, a fluorine-containing nonionic surfactant or a silicon-containing nonionic surfactant may be also used.

The surfactants may be used alone, or may be used in a combination of two or more of them.

It is not necessary to particularly limit the addition amount of the surfactant, but the content of the surfactant with respect to the total mass of the rinsing liquid is preferably from 0.01% by mass to 20% by mass, and more preferably from 0.05% by mass to 10% by mass. [0158] In the present invention, it is particularly preferable that the rinsing liquid contains an amphoteric surfactant represented by the following Formula (1) (a compound represented by Formula (1)) and/or an amphoteric surfactant represented by the following Formula (2) (a compound represented by Formula (2)). Among them, it is preferable that the rinsing liquid contains at least an amphoteric surfactant represented by the following Formula (1) (a compound represented by Formula (1)).

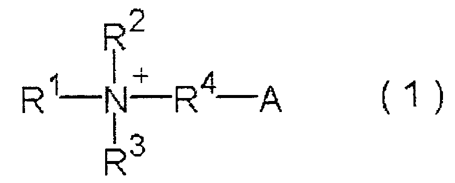

In Formula (1), R¹ to R³ each independently represent a monovalent organic group; R⁴ represents a single bond or a divalent linking, group; A represents PO(OR⁵)O⁻, OPO(OR⁵)O⁻, O⁻, COO⁻, or SO₃⁻; R⁵ represents a hydrogen atom or a monovalent organic group; and two or more of R¹ to R³ may be bonded to each other to form a ring.

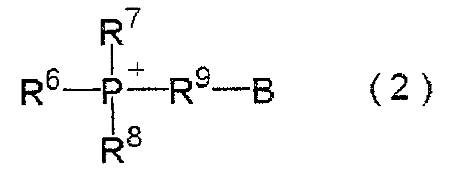

In Formula (2), R⁶ to R⁸ each independently represent a hydroxy group or a monovalent organic group; R⁹ represents a single bond or a divalent linking group; B represents PO(OR¹⁰)O⁻, OPO(OR¹⁰)O⁻, O⁻, COO⁻, or SO₃⁻; R¹⁰ represents a hydrogen atom or a monovalent organic group; and two or more of R⁶ to R⁸ may be bonded to each other to form a ring.

It is preferable that the compound represented by the above Formula (1) or the compound represented by the above Formula (2) is a carboxy betaine compound, a sulfo betaine compound, a phospho betaine compound, an amine oxide compound, or a phosphine oxide compound. It should be noted that, in the present invention, the structure of N=O in the amine oxide compound and the structure of P=O in the phosphine oxide compound are regarded as N⁺-O⁻ and P⁺-O⁻, respectively.

R¹ to R³ in the above Formula (1) each independently represent a monovalent organic group. Further, two or more of R¹ to R³ may be bonded to each other to form a ring, but it is preferable not to form a ring.

The monovalent organic group represented by R¹ to R³ is not particularly limited, but is preferably an alkyl group, an alkyl group having a hydroxy group, an alkyl group having an amide bond in an alkyl chain thereof, or an alkyl group having an ether bond in an alkyl chain thereof, and more preferably an alkyl group, an alkyl group having a hydroxy group, or an alkyl group having an amide bond in an alkyl chain thereof.

The alkyl group in the above monovalent organic group may be a straight chain or a branched chain, or may have a ring structure.

It is particularly preferable that two of R¹ to R³ represent a methyl group, that is, the compound represented by Formula (1) has an N,N-dimethyl structure. When a compound having this structure is employed, particularly, good rinsability is exhibited.

R⁴ in the above Formula (1) represents a single bond or a divalent linking group. When the compound represented by Formula (1) is an amine oxide compound, R⁴ represents a single bond.

The divalent linking group represented by R⁴ is not particularly limited, but is preferably an alkylene group or an alkylene group having a hydroxy group, more preferably an alkylene group having 1 to 8 carbon atoms or an alkylene group which has a hydroxy group and 1 to 8 carbon atoms, and even more preferably an alkylene group having 1 to 3 carbon atoms or an alkylene group which has a hydroxy group and 1 to 3 carbon atoms.

A in the above Formula (I) represents PO(OR⁵)O⁻, OPO(OR⁵)O⁻, O⁻, COO⁻, or SO₃⁻, It is preferable that A represents O⁻, COO⁻, or SO₃⁻, and it is more preferable that A represents COO⁻.

When A represents O⁻, it is preferable that R⁴ represents a single bond.

R⁵ in PO(OR⁵)O⁻ or OPO(OR⁵)O⁻ represents a hydrogen atom or a monovalent organic group, and preferably represents a hydrogen atom or an alkyl group having one or more unsaturated fatty acid ester structures.

Further, it is preferable that R⁴ represents a group which does not have PO(OR⁵)O⁻, OPO(OR⁵)O⁻, O⁻, COO⁻, or SO₃⁻.

R⁶ to R⁸ in the above Formula (2) each independently represent a hydroxy group or a monovalent organic group. Further, two or more of R⁶ to R⁸ may be bonded to each other to form a ring, but it is preferable not to form a ring.

R⁶ to R⁸ are not particularly limited, but are each preferably an alkyl group, an alkenyl group, an aryl group, or a hydroxy group, and more preferably an alkenyl group, an aryl group, or a hydroxy group.

The alkyl group in the above monovalent organic group may be a straight chain or a branched chain, or may have a ring structure.

It is particularly preferable that two of R⁶ to R⁸ represent an aryl group.

R⁹ in the above Formula (2) represents a single bond or a divalent linking group. When the compound represented by Formula (2) is a phosphine oxide compound, R⁹ represents a single bond.

The divalent linking group represented by R⁹ is not particularly limited, but is preferably an alkylene group or an alkylene group having a hydroxy group, more preferably an alkylene group having 1 to 8 carbon atoms or an alkylene group which has a hydroxy group and 1 to 8 carbon atoms, and even more preferably an alkylene group having 1 to 3 carbon atoms or an alkylene group which has a hydroxy group and 1 to 3 carbon atoms.

B in the above Formula (2) represents PO(OR¹⁰)O⁻, OPO(OR¹⁰)O⁻, O⁻, COO⁻, or SO₃⁻. B preferably represents O⁻.

When B represents O⁻, it is preferable that R⁹ represents a single bond.

R¹⁰ in PO(OR¹⁰)O⁻ or OPO(OR¹⁰)O⁻ represents a hydrogen atom or a monovalent organic group, and preferably represents a hydrogen atom or an alkyl group having one or more unsaturated fatty acid ester structures.

Further, it is preferable that R⁹ represents a group which does not have PO(OR¹⁰)O⁻, OPO(OR¹⁰)O⁻, O⁻, COO', or SO₃⁻.

The compound represented by Formula (1) is preferably a compound represented by the following Formula (3).

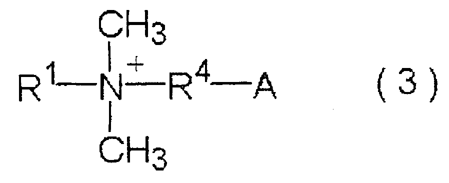

In Formula (3), R¹ represents a monovalent organic group; R⁴ represents a single bond or a divalent linking group; A represents PO(OR⁵)O⁻, OPO(OR⁵)O⁻, O⁻, COO⁻, or SO₃⁻; R⁵ represents a hydrogen atom or a monovalent organic group.

R¹, A, and R⁵ in Formula (3) each have the same meaning as R¹, A, and R⁵ in Formula (1), respectively, and preferable ranges are also the same.

The compound represented by Formula (2) is preferably a compound represented by the following Formula (4).

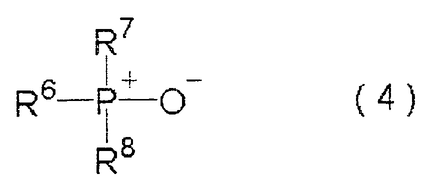

In Formula (4), R⁶ to R⁸ each independently represent an alkyl group, an alkenyl group, an aryl group, or a hydroxy group; however, all of R⁶ to R⁸ do not represent the same group at the same time.

R⁶ to R⁸ in the above Formula (4) each independently represent an alkyl group, an alkenyl group, an aryl group, or a hydroxy group, and preferably represent an alkenyl group, an aryl group, or a hydroxy group.

As specific examples of the compound represented by Formula (1) and the compound represented by Formula (2), the following compounds may be preferably exemplified.

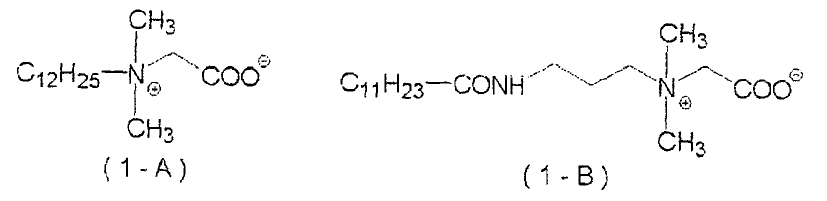

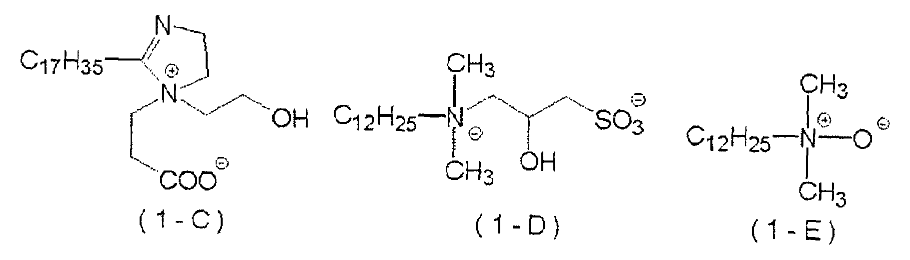

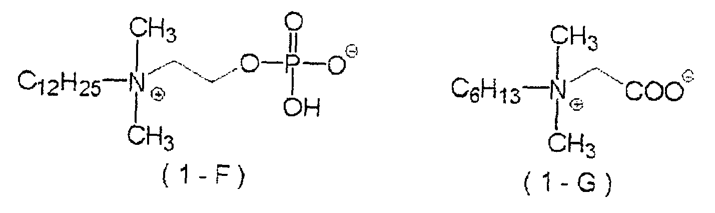

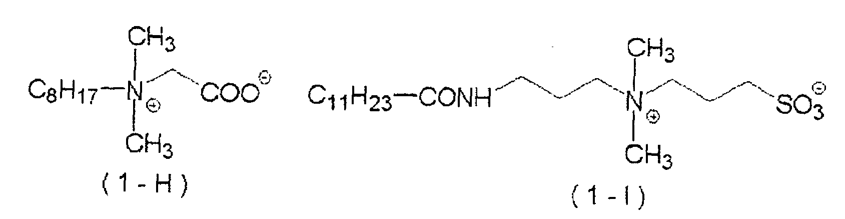

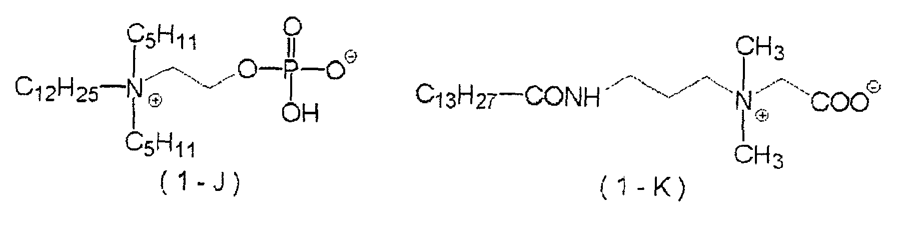

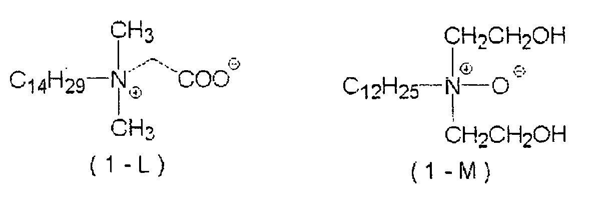

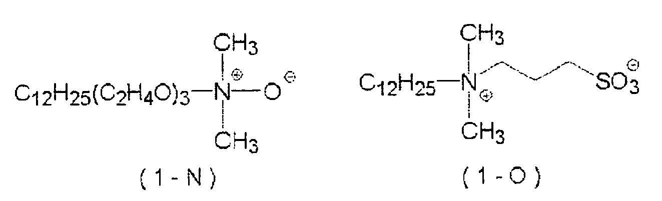

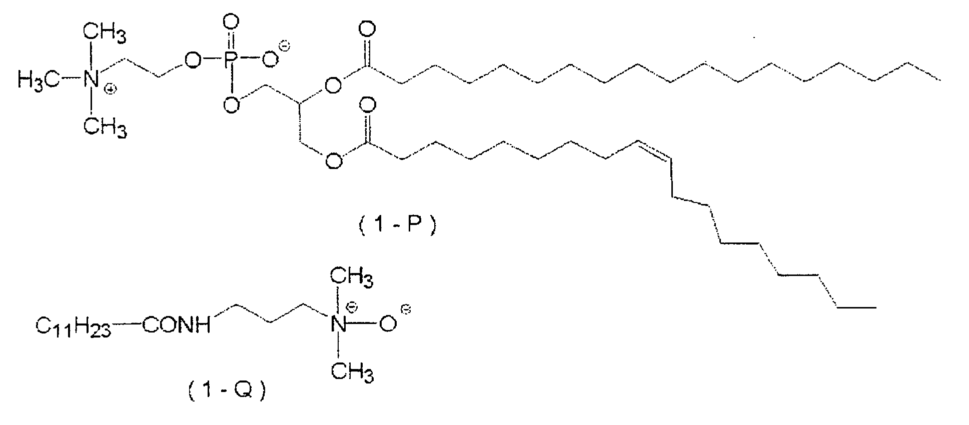

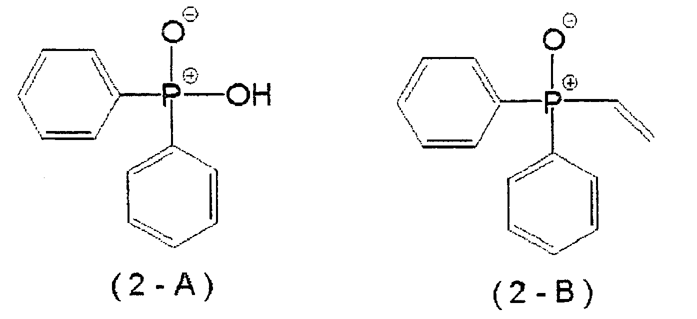

In the present invention, the compounds represented by the above Formula (1) and/or the compounds represented by the above Formula (2) may be used alone or in a combination of two or more of them, in the rinsing liquid used in the (iv) rinsing process. However, it is preferable that the rinsing liquid contains at least the compound represented by the above Formula (1).

The total content of the compound represented by Formula (1) and/or the compound represented by Formula (2) in the rinsing liquid used in the present invention is preferably from 0.1% by mass to 20% by mass, more preferably from 0.3% by mass to 10% by mass, and even more preferably from 0.5% by mass to 7% by mass.

A surfactant other than the compound represented by Formula (1) and the compound represented by Formula (2) may be used in combination in the rinsing liquid used in the present invention.

In the case of using a surfactant other than the compound represented by Formula (1) and the compound represented by Formula (2) in the rinsing liquid used in the present invention, the addition amount of the surfactant is preferably such that [total mass of compound represented by Formula (1) and compound represented by Formula (2)] : [total mass of the surfactant other than compound represented by Formula (1) and compound represented by Formula (2)] = from 1 : 1.2 to 1: 0.1, and more preferably from 1:1 to 1:0.1.

The rinsing liquid used in the present invention preferably contains water as a main component, but may contain, as a solvent other than water, a water-miscible solvent such as an alcohol, acetone or tetrahydrofuran.

It is preferable that the rinsing liquid used in the present invention further contains an antifoaming agent.

As the antifoaming agent, a compound which is a general silicone-based antifoaming agent of a self-emulsification type, an emulsification type or a surfactant nonion type and has an HLB (Hydrophile-Lipophile Balance) value of 5 or less can be used. Silicone antifoaming agents are preferable. Among them, either of an emulsification dispersion type or a solubilization type may be used.

Specific examples of the antifoaming agent include TSA731 and TSA739 (all trade names, manufactured by Dow Corning Toray Silicone Co., Ltd.).

The content of the antifoaming agent in the rinsing liquid is preferably from 0.001% by mass to 1.0% by mass.

Further, the rinsing liquid used in the present invention may include, as necessary, an antiseptic, an inorganic acid, a chelating agent, a solvent, or the like.

As the antiseptic, inorganic acid, chelating agent, or solvent, known compounds may be used.

The rinsing liquid in the (iv) rinsing process should cover at least the whole plate. While it depends on the plate, the usage amount of the rinsing liquid is preferably 10 cc/m² or more, more preferably 50 cc/m² or more, and even more preferably 70 cc/m² or more. Further, from the viewpoint of costs of the treatment liquid, the usage amount of the rinsing liquid is particularly preferably from 70 cc/m² to 500 cc/m².

Examples of a rinsing method in the (iv) rinsing process include a method of spraying high pressure water, and a method of brush rubbing the engraved surface mainly in the presence of water, using a batch type or conveyor type brash washout machine known as a developing machine for photosensitive resin letterpress plates.

When the (iv) rinsing process is conducted to the engraved surface, it is preferred to add a process of drying the engraved relief forming layer in order to volatilize the rinsing liquid ((v) drying process).

Further, if necessary, a process of further crosslinking the relief layer ((vi) post-crosslinking process) may be added. By carrying out the (vi) post-crosslinking process, the relief formed by the engraving may be further strengthened.

In this way, a relief printing plate having a relief layer over a surface of an arbitrary substrate such as a support is obtained.

The thickness of the relief layer in the relief printing plate is preferably from 0.05 mm to 10 mm, more preferably from 0.05 mm to 7 mm, and particularly preferably from 0.05 mm to 3 mm, from the viewpoints of satisfying various kinds of printing suitabilities such as abrasion resistance or ink transferability.

In the present invention, it is preferred that a Shore A hardness of the relief layer (that is, the crosslinked relief forming layer) of the relief printing plate is from 50° to 90°.

When the Shore A hardness is 50° or more, fine halftone dots formed by the engraving are not collapsed even when a strong printing pressure of a letterpress printing machine is applied to them, so that normal printing can be performed. Further, when the Shore A hardness is 90° or less, faded prints in the solid image area can be prevented from occurring even in a flexographic printing in which a kiss-touch printing pressure is used.

Note that, the "Shore A hardness" in this specification means a value determined using a durometer (spring type rubber hardness meter) which measures the amount of deformation (pushed depth) of the surface and expresses the results in a numerical value, wherein the above deformation is caused by pushing an indenter (which is also referred to as a stylus) onto the surface of the object to be measured under the conditions of 25°C and 50%RH.

In the invention, the relief printing plate produced by using the relief printing plate precursor allows printing with a letterpress printing machine using any of an aqueous ink, an oily ink or a UV ink, and also allows printing with a flexographic printing machine using a UV ink. In the invention, the relief printing plate obtained from the relief printing plate precursor has excellent rinsability, so that engraving scraps do not remain on the relief printing plate. In addition, since the obtained relief layer has excellent elasticity, the relief printing plate of the invention has excellent ink transferability and excellent print durability. Accordingly, printing can be performed by employing the relief printing plate without concern for plastic deformation of the relief layer or deterioration in print durability for a long period of time.

### EXAMPLES

The present invention will be further explained in detail with reference to the following examples, but it should be construed that the invention is no way limited to these examples.

### (Example 1)

### 1. Preparation of Coaling Liquid for Forming Relief Forming Layer

In a three necked flask equipped with a stirring blade and a cooling tube, 50 parts by mass of PVB "DENKA BUTYRAL #3000-2" (trade name, manufactured by Denki Kagaku Kogyo K.K.; polyvinyl butyral; weight average molecular weight (Mw) = 90,000) as the binder polymer (B), 36 parts by mass of the above-described exemplified compound A-1 (manufactured by Tokyo Chemical Industry Co., Ltd.; methyl 4-hydroxybenzoate) as the phenol derivative (A), and 47 parts by mass of propylene glycol monomethyl ether acetate as the solvent were placed, and the mixture was heated while stirring at 70°C for 120 minutes to dissolve the polymer.

Thereafter, the resulting solution was cooled to 40°C, and to this solution, 1 part by mass of KETJENBLACK EC600JD (trade name, manufactured by Lion Corporation; carbon black) as the photothermal conversion agent (D) was added, and the mixture was stirred for 30 minutes.

Then, to the resulting mixture, 23 parts by mass of the above-described exemplified compound S-1 (available from Shin-Etsu Chemical Co., Ltd. under the trade name KBE-846) as the crosslinking agent (C) and, further, 0.8 parts by mass of DBU (1,8-diazabicyclo[5,4,0]undec-7-ene) as the catalyst were added, and the resulting mixture was stirred at 40°C for 10 minutes.

By this operation, a coating liquid 1 (resin composition) for forming a crosslinkable relief forming layer, the coating liquid 1 having fluidity, was obtained.

### 2. Preparation of Relief Printing Plate Precursor for Laser Engraving

A spacer (frame) with a predetermined thickness was placed on a PET substrate, and the coating liquid 1 for forming a relief forming layer obtained as described above was cast carefully to an extent that the coating liquid did not flow over the spacer (flame). The cast coating liquid was dried in an oven at 65°C for 4 hours, whereby a relief forming layer having a thickness of about I mm was provided.

The obtained relief forming layer was heated at 100°C for 3 hours so as to crosslink the relief forming layer by heat. In this way, a relief printing plate precursor for laser engraving having a crosslinked relief forming layer was obtained.

### 3. Preparation of Relief Printing Plate

### <Engraving Using Semiconductor Laser (FC-LD) with Fiber (FC-LD Engraving)>

As a semiconductor laser engraving machine, the above-described laser recording apparatus with fiber shown in Fig. 1, which was equipped with a semiconductor laser with fiber (FC-LD), SDL-6390 (trade name, manufactured by JDSU; wavelength: 915 nm) having a maximum output of 8.0 W, was used. With respect to the crosslinked relief forming layer after crosslinking in the relief printing plate precursor, a solid image area with a size of 1 centimeter square was raster engraved using this semiconductor laser engraving machine under the conditions of laser output of 6 W, head speed of 100 mm/sec, and pitch of 2,400 DPI. Note that, results of evaluation using this laser are expressed by "FC-LD" in the tables described below.

### <Engraving Using CO₂ Laser (CO₂ Laser Engraving)>

As a carbon dioxide laser engraving machine, a high quality CO₂ laser marker, ML-9100 SERIES (trade name, manufactured by Keyence Corporation) was used. With respect to the crosslinked relief forming layer after crosslinking in the relief printing plate precursor, a solid image area of 1 centimeter square was raster engraved using this carbon dioxide laser engraving machine under the conditions of laser output of 12 W, head speed of 200 mm/sec, and pitch of 2,400 DPI. Note that, results of evaluation using this laser are expressed by "CO₂ laser" in the tables described below.

The thickness of the relief layer of the resulting relief printing plate was 1-1 mm, in both cases of the FC-LD engraving and CO₂ laser engraving.

Upon the measurement of Shore A hardness of the relief layer by the measurement method described above, the Shore A hardness of the relief layer was revealed to be 70°. Note that, measurement of the Shore A hardness of the relief layer was similarly performed in each of the Examples and Comparative Examples described below.

### (Examples 2 to 27, and Comparative Examples 1 and 2)

Preparation of relief printing plate precursors for laser engraving was conducted in a manner substantially similar to that in Example 1, except that coating liquids for forming relief forming layer were prepared by replacing the phenol derivative (A) and the binder polymer (B) in the "1. Preparation of Coating Liquid for Forming Relief Forming Layer" in Example 1 with the compounds, which are shown in Table 1 or Table 2, respectively. Thereafter, from the resulting relief printing plate precursors for laser engraving, relief printing plates 2 to 27, C1, and C2 were prepared.

Details of the binder polymer (B) used in Examples 25 to 27, and polyethylene glycol dimethyl ether used in place of the phenol derivative (A) in Comparative Example 2 are as follows.
- Hydroxy group-containing acrylic resin: copolymer of cyclohexyl methacrylate/ 2-hydroxyethyl methacrylate (70/30 (mol%), Mw = 50,000)
- Novolac resin: novolac resin (Mw = 20,000) obtained from octylphenol/ formaldehyde (50/ 50)
- Poly bd: registered trademark, manufactured by Idemitsu Kosan Co., Ltd.; hydroxy-terminated polybutadiene
- Polyethylene glycol dimethyl ether: manufactured by Aldrich, Mn = 500

### (Example 28)

Preparation of a relief printing plate precursor for laser engraving was conducted in a manner substantially similar to that in Example 1, except that a coating liquid for forming a relief forming layer was prepared by replacing the crosslinking agent (C) in the "1. Preparation of Coating Liquid for Forming Relief Forming Layer" in Example 1 with 3,3',4,4'-diphenyl sulfone tetracarboxylic dianhydride (manufactured by Tokyo Chemical Industry Co., Ltd.; the above-described specific example (6)). Thereafter, a relief printing plate 28 was prepared from the resulting relief printing plate precursor for laser engraving.

### (Example 29)

Preparation of a relief printing plate precursor for laser engraving was conducted in a manner substantially similar to that in Example 1, except that a coating liquid for forming a relief forming layer was prepared by replacing the crosslinking agent (C) in the "1. Preparation of Coating Liquid for Forming Relief Forming Layer" in Example 1 with 2,4-tolylene diisocyanate (manufactured by Tokyo Chemical Industry Co., Ltd.). Thereafter, a relief printing plate 29 was prepared from the resulting relief printing plate precursor for laser engraving.

### (Example 30)

Preparation of a relief printing plate precursor for laser engraving was conducted in a manner substantially similar to that in Example 1, except that a coating liquid for forming a relief forming layer was prepared without adding the photothermal conversion agent (D) used in the "1. Preparation of Coating Liquid for Forming Relief Forming Layer" in Example 1. Thereafter, a relief printing plate 30 was prepared from the resulting relief printing plate precursor for laser engraving.

### <Measurement of ClogP value>

ClogP values of the phenol derivative (A) used in each Example and polyethylene glycol dimethyl ether used in Comparative Example 2 were calculated according to the following method.

Namely, the ClogP values were calculated using CLOGP program built in PCModels of DayLight Chemical Information Systems Co., Ltd. Results are shown in Tables 1 and 2.

### <Evaluation>

### - Evaluation of Engraving Depth -

"Engraving depth" of the relief layer in each of the relief printing plates I to 31, C1, and C2 was measured in a manner as described below. Herein, the "engraving depth" refers to a difference between an engraved position (height) and an unengraved position (height), when a cross section of the relief layer is observed. The "engraving depth" in the present Examples was measured by observing the cross section of the relief layer using an ultra-deep color 3-D profile measuring microscope VK9510 (trade name, manufactured by Keyence Corporation). A greater engraving depth means that the engraving sensitivity is higher. Results are shown in Tables 1 and 2.

### - Evaluation of Rinsability -

A 10% by mass aqueous solution of sodium hydroxide was added to water (main component) to adjust the pH to 12, and then the above-described amphoteric surfactant (1-A) was added so that the content of the amphoteric surfactant (1-A) was 1% by weight. Thereby, a rinsing liquid was prepared.

Then, the rinsing liquid in an amount of about 100 cc/m² was poured on the plate surface of the relief printing plate which had been subjected to laser engraving. Then, the engraved portion was rubbed 20 times (for 30 minutes) using a toothbrush (trade name: CLINICA HABURASHI FLAT, manufactured by Lion Corporation) with a load of 200 gf in the direction parallel to the plate. Thereafter, the moisture on the plate surface was removed, and was naturally dried for about one hour. The surface was observed using a microscope (manufactured by Keyence Corporation) with ×100 magnification, and the presence of remaining scraps on the plate was evaluated. The evaluation criteria are described below. The stages 3, 4, and 5 in the evaluation criteria indicate practically acceptable ranges. Results are shown in Tables 1 and 2.
1: Scraps adhere to the whole surface of the plate.
2: A small amount of scraps remains at the convexities of the plate image, and scraps remain at the bottom portions (concavities) of the image.
3: A small amount of scraps remains at the convexities of the plate image, and a small amount of scraps remains at the bottom portions (concavities) of the image.
4: A small amount of scraps remains only at the bottom portions (concavities) of the image.
5: No scrap remains on the plate.

### - Insolubilization Ratio -

An unengraved relief printing plate precursor was immersed in a 10% by mass aqueous solution of 2-propanol for 24 hours, and the mass change thereof was measured. When the mass change is 5% or less, which is practically acceptable, evaluation is expressed as "A". When the mass change exceeds 5%, which is not practically acceptable, evaluation is expressed as "B". Results are shown in Tables 1 and 2.

### - Ink transferability -

The relief printing plate obtained by laser engraving was mounted on a flexographic printing machine, and a solid image was printed. Printing was performed using ITM-4 TYPE (trade name), manufactured by IYO KIKAI SEISAKUSHO Co., Ltd., as the printing machine; FULL-COLOR FORM M 70 (trade name, manufactured by Nippon Paper Industries Co., Ltd.; thickness: 100 µm) as the printing paper; and an UV curable ink (trade name: UV FLEXO 500 AI (indigo)) as the ink.

An arbitrary area of 1 centimeter square in the solid image thus printed was read using a scanner at a dot size of 10 µm square. Uniformity of the ink landed was expressed using the standard deviation of the density values of the respective dots, when the maximum density of blue density was regarded as 255, and the minimum density was regarded as 0. The smaller value represents that the ink transfers more uniformly. Results are shown in Tables I and 2.

**TABLE 1**

| No. | Phenol Derivative (A) | | Binder Polymer (B) | Crosslinking Agent (C) | Photo-thermal Agent (D) | Relief Layer | | Performance Evaluation | | | | |
|---|---|---|---|---|---|---|---|---|---|---|---|---|
| | Compound | ClogP | | | | Film Thickness (mm) | Shore A Hardness (° ) | Insolubilization Ratio | Ink Transferability | Rinsability * | Engraving Depth (µm) (FC-LD) | Engraving Depth (µm) (CO₂ Laser) |
| Example 1 | A-1 | 2.0 | PVB (#3000-2) | S-1 | Carbon black | 1.1 | 70 | A | 6.7 | 3 | 415 | 330 |
| Example 2 | A-2 | 3.6 | PVB (#3000-2) | S-1 | Carbon black | 1.1 | 70 | A | 4.1 | 5 | 415 | 330 |
| Example 3 | A-3 | 5.2 | PVB (#3000-2) | S-1 | Carbon black | 1.0 | 65 | A | 4.9 | 5 | 415 | 330 |
| Example 4 | A-4 | 3.4 | PVB (#3000-2) | S-1 | Carbon black | 1.2 | 75 | A | 5.3 | 5 | 415 | 330 |
| Example 5 | A-5 | 5.6 | PVB (#3000-2) | S-1 | Carbon black | 1.1 | 75 | A | 3.5 | 5 | 415 | 330 |
| Example 6 | A-6 | 3.8 | PVB (#3000-2) | S-1 | Carbon black | 1.2 | 75 | A | 5.4 | 5 | 415 | 330 |
| Example 7 | A-7 | 1.9 | PVB (#3000-2) | S-1 | Carbon black | 0.9 | 60 | A | 4.0 | 5 | 415 | 330 |
| Example 8 | A-8 | 1.7 | PVB (#3000-2) | S-1 | Carbon black | 1.0 | 65 | A | 3.9 | 5 | 415 | 330 |
| Example 9 | A-9 | 3.6 | PVB (#3000-2) | S-1 | Carbon black | 1.0 | 70 | A | 3.8 | 5 | 415 | 330 |
| Example 10 | A-10 | 3.9 | PVB (#3000-2) | S-1 | Carbon black | 1.0 | 65 | A | 5.7 | 3 | 415 | 330 |
| Example 11 | A-11 | 3.4 | PVB (#3000-2) | S-1 | Carbon black | 1.1 | 70 | A | 4.5 | 5 | 415 | 330 |
| Example 12 | A-12 | 2.1 | PVB (#3000-2) | S-1 | Carbon black | 0.9 | 65 | A | 4.8 | 4 | 415 | 330 |
| Example 13 | A-13 | 6.2 | PVB (#3000-2) | S-1 | Carbon black | 1.2 | 70 | A | 5.8 | 4 | 415 | 330 |
| Example 14 | A-14 | 5.2 | PVB (#3000-2) | S-1 | Carbon black | 1.1 | 70 | A | 6.1 | 4 | 415 | 330 |
| Example 15 | A-15 | 3.6 | PVB (#3000-2) | S-1 | Carbon black | 1.0 | 70 | A | 4.3 | 5 | 415 | 330 |
| Example 16 | A-16 | 4.1 | PVB (#3000-2) | S-1 | Carbon black | 1.0 | 65 | A | 4.5 | 5 | 415 | 330 |
| Example 17 | A-17 | 4.3 | PVB (#3000-2) | S-1 | Carbon black | 1.2 | 70 | A | 4.4 | 5 | 435 | 330 |
| Example 18 | A-18 | 4.4 | PVB (#3000-2) | S-1 | Carbon black | 1.0 | 70 | A | 4.8 | 5 | 415 | 330 |
| Example 19 | A-19 | 4.8 | PVB (#3000-2) | S-1 | Carbon black | 1.1 | 65 | A | 4.0 | 5 | 415 | 330 |
| Example 20 | A-20 | 2.4 | PUB (#3000-2) | S-1 | Carbon black | 0.9 | 60 | A | 5.6 | 5 | 415 | 330 |
| Example 21 | A-21 | 3.7 | PVB (#3000-2) | S-1 | Carbon black | 0.9 | 70 | A | 5.8 | 5 | 415 | 330 |
| Example 22 | A-22 | 9.8 | PVB (#3000-2) | S-1 | Carbon black | 1.2 | 75 | A | 6.4 | 4 | 415 | 330 |
| Example 23 | A-23 | 7.0 | PVB (#3000-2) | S-1 | Carbon black | 1.1 | 70 | A | 6.2 | 4 | 415 | 330 |
| Example 24 | A-24 | 3.2 | PVB (#3000-2) | S-1 | Carbon black | 1.0 | 70 | A | 5.2 | 3 | 415 | 330 |

| | | | | | | | | | | | | |
|---|---|---|---|---|---|---|---|---|---|---|---|---|
| *) Evaluation levels are set to 5 stages: (good) 5, 4, 3, 2, and 1 (bad) | | | | | | | | | | | | |

**TABLE 2**

| No. | Phenol Derivative (A) | | Binder Polymer (B) | Crosslinking Agent (C) | Photo-thermal Conversion Agent (D) | Relief Layer | | Performance Evaluation | | | | |
|---|---|---|---|---|---|---|---|---|---|---|---|---|
| | Compound | ClogP | | | | Film Thickness (mm) | Shore A Hardness (* ) | Insolubilization Ratio | Ink Transfer ability | Rinsability * | Engraving Depth (µm) (FC-LD) | Engraving Depth (µm) (CO₂ Laser) |
| Example 25 | A-2 | 3.6 | Hydroxy group-containing acrylic resin | S-1 | Carbon black | 1.1 | 65 | A | 4.4 | 4 | 405 | 320 |
| Example 26 | A-2 | 3.6 | Novolac resin | S-1 | Carbon black | 0.9 | 60 | A | 5.2 | 4 | 400 | 316 |
| Example 27 | A-2 | 3.6 | Poly bd | S-1 | Carbon black | 1.0 | 65 | A | 5.3 | 3 | 395 | 312 |
| Example 28 | A-2 | 3.6 | PVB (#3000-2) | (6) | Carbon black | 1.1 | 65 | A | 4.5 | 3 | 415 | 330 |
| Example 29 | A-2 | 3.6 | PVB (#3000-2) | 2,4-Tolylene diisocyanate | Carbon black | 1.0 | 70 | A | 4.3 | 3 | 415 | 330 |
| Example 30 | A-2 | 3.6 | PVB (#3000-2) | S-1 | (not added) | 1.1 | 70 | A | 4.1 | 5 | 370 | 292 |
| Comp. Example 1 | (not added) | - | PVB (#3000-2) | S-1 | Carbon black | 1.1 | 75 | A | 25.4 | 1 | 415 | 330 |
| Comp. Example 2 | Polyethylene glycol dimethyl ether | about-1 | PVB (#3000-2) | S-1 | Carbon black | 1.0 | 70 | B | 4.3 | 4 | 415 | 330 |

| | | | | | | | | | | | | |
|---|---|---|---|---|---|---|---|---|---|---|---|---|
| *) Evaluation levels are set to 5 stages: (good) 5, 4, 3, 2, and I (bad) | | | | | | | | | | | | |

It was clear from Tables 1 and 2 that the relief printing plate precursors of the Examples 1 to 30 exhibited high engraving sensitivity irrespective of the kind of laser, excellent rinsability, good insolubilization ratio, and sufficient ink transferability. Particularly, it was understood that the use of preferable embodiment of the phenol derivative (A) made it possible to further enhance the rinsability and ink transferability.

## Claims

1. A resin composition for laser engraving, comprising at least a phenol derivative (A) represented by the following Formula (A), a binder polymer (B), and a crosslinking agent (C), wherein the content of the phenol derivative (A) with respect to the total solid content of the resin composition is from 5% by mass to 50% by mass, and wherein the crosslinking agent (C) is a compound having a plurality of acid anhydride residues; a compound having a plurality of isocyanate groups; or a compound having a -SiR¹R² R³ group, wherein R¹ to R³ each independently represent a hydrogen atom, a halogen atom, a hydroxy group, or a monovalent organic group, provided at least one of R¹ to R³ represents an alkyl group, an aryl group, an alkoxy group, a hydroxy group, or a halogen atom: 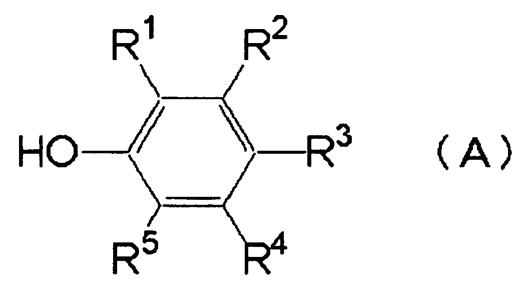 wherein R¹, R², R³, R⁴, and R⁵ each independently represent a hydrogen atom or a monovalent substituent; at least one of R¹, R², R³, R⁴, or R⁵ is a monovalent substituent having a structure represented by -X-R⁶; X represents a single bond, -O-, -NR⁷-, -S-, - COO-, -CONR⁸-, -COS-, -OCO-, -NR⁹CO-, -SCO-, -OCONH-, -NR¹⁰CONH-, -SCONH-, -SO₃-, -OSO₂-, or -SO₂-; R⁶ represents an alkyl group, an alkenyl group, an alkynyl group, an aryl group, or a heterocyclic group, in which the number of constituent atoms other than hydrogen atoms in each of these groups is from 1 to 20; and R⁷, R⁸, R⁹, and R¹⁰ each independently represent a hydrogen atom, an alkyl group, an alkenyl group, an alkynyl group, an aryl group, or a heterocyclic group, in which the number of constituent atoms other than hydrogen atoms in each of these groups is from 1 to 20.

2. The resin composition for laser engraving according to claim 1, wherein a glass transition temperature (Tg) of the binder polymer (B) is from 20°C to 200°C.

3. The resin composition for laser engraving according to claim 1 or 2, wherein the binder polymer (B) comprises a functional group capable of reacting with a crosslinkable group contained in the crosslinking agent (C).

4. The resin composition for laser engraving according to any of claims 1 to 3, wherein the binder polymer (B) comprises one or more selected from the group consisting of polyvinyl acetal, a derivative thereof, and an acrylic resin.

5. The resin composition for laser engraving according to any of claims 1 to 4, wherein the binder polymer (B) comprises polyvinyl butyral or a derivative thereof.

6. The resin composition for laser engraving according to any of claims 1 to 5, further comprising a photothermal conversion agent (D) that absorbs light having a wavelength of from 700 nm to 1,300 nm.

7. A relief printing plate precursor for laser engraving, comprising a relief forming layer comprising the resin composition for laser engraving according to any of claims 1 to 6.

8. A relief printing plate precursor for laser engraving according to claim 7, wherein the relief forming layer has been crosslinked.

9. A method for producing a relief printing plate precursor for laser engraving, the method comprising:
(i) forming a relief forming layer comprising the resin composition for laser engraving according to any of claims 1 to 6; and
(ii) crosslinking the relief forming layer using at least one of heat or light to form a crosslinked relief forming layer.

10. A method for making a relief printing plate, comprising:
the steps (i) and (ii) for producing a relief printing plate precursor as defined in claim 9; and
(iii) laser engraving the crosslinked relief forming layer.

11. The method for making a relief printing plate according to claim 10, further comprising (iv) washing the crosslinked relief forming layer with an alkali treatment liquid.

12. The method for making a relief printing plate according to claim 10 or 11, wherein the (ii) crosslinking is conducted using heat.

13. A relief printing plate comprising a relief layer, which is obtainable by the method for making a relief printing plate according to any of claims 10 to 12.

14. The relief printing plate according to claim 13, wherein the Shore A hardness of the relief layer is from 50° to 90°.

## Patentansprüche

1. Harzzusammensetzung für die Lasergravur, umfassend mindestens ein Phenolderivat (A), das durch die folgende Formel (A) dargestellt ist, ein Binderpolymer (B) und ein Vernetzungsmittel (C), worin der Gehalt des Phenolderivats (A) in Bezug auf den Gesamtfeststoffgehalt der Harzzusammensetzung 5 bis 50 Masse% beträgt und worin das Vernetzungsmittel (C) eine Verbindung mit einer Vielzahl von Säureanhydridresten, eine Verbindung mit einer Vielzahl von Isocyanatgruppen; oder eine Verbindung mit einer -SiR¹R²R³-Gruppe ist, worin R¹ bis R³ jeweils unabhängig voneinander ein Wasserstoffatom, ein Halogenatom, eine Hydroxygruppe oder eine monovalente organische Gruppe darstellen, vorausgesetzt, dass mindestens eines von R¹ bis R³ eine Alkylgruppe, eine Arylgruppe, eine Alkoxygruppe, eine Hydroxygruppe oder ein Halogenatom darstellt: 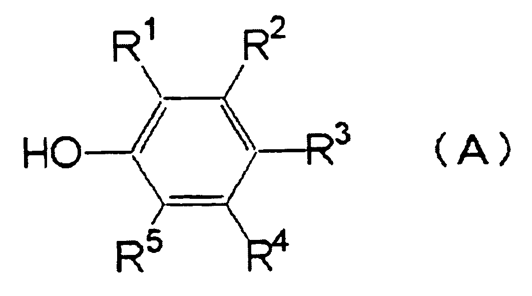 worin R¹, R², R³, R⁴ und R⁵ jeweils unabhängig voneinander ein Wasserstoffatom oder einen monovalenten Substituenten darstellen; mindestens eines von R¹, R², R³, R⁴ oder R⁵ ein monovalenter Substituent mit einer durch -X-R⁶ dargestellten Struktur ist; X eine Einfachbindung, -O-, -NR⁷-, -S-, -COO-, -CONR⁸-, -COS-, -OCO-, -NR⁹CO-, -SCO-, -OCONH-, -NR¹⁰CONH-, -SCONH-, -SO₃-, -OSO₂- oder -SO₂- darstellt; R⁶ eine Alkylgruppe, eine Alkenylgruppe, eine Alkinylgruppe, eine Arylgruppe oder eine heterocyclische Gruppe darstellt, worin die Anzahl der Aufbauatome, ausgenommen Wasserstoffatome, in jeder dieser Gruppen 1 bis 20 beträgt; und R⁷, R⁸, R⁹ und R¹⁰ jeweils unabhängig voneinander ein Wasserstoffatom, eine Alkylgruppe, eine Alkenylgruppe, eine Alkinylgruppe, eine Arylgruppe oder eine heterocyclische Gruppe darstellen, worin die Anzahl der Aufbauatome, ausgenommen Wasserstoffatome, in jeder dieser Gruppen 1 bis 20 beträgt.

2. Harzzusammensetzung für die Lasergravur gemäß Anspruch 1, worin die Glasübergangstemperatur (Tg) des Binderpolymers (B) 20 bis 200°C beträgt.

3. Harzzusammensetzung für die Lasergravur gemäß Anspruch 1 oder 2, worin das Binderpolymer (B) eine funktionelle Gruppe umfasst, die mit einer vernetzbaren Gruppe reagieren kann, die in dem Vernetzungsmittel (C) enthalten ist.

4. Harzzusammensetzung für die Lasergravur gemäß irgendeinem der Ansprüche 1 bis 3, worin das Binderpolymer (B) eines oder mehr umfasst, ausgewählt aus der Gruppe bestehend aus Polyvinylacetal, einem Derivat hiervon und einem Acrylharz.

5. Harzzusammensetzung für die Lasergravur gemäß irgendeinem der Ansprüche 1 bis 4, worin das Binderpolymer (B) Polyvinylbutyral oder ein Derivat hiervon umfasst.

6. Harzzusammensetzung für die Lasergravur gemäß irgendeinem der Ansprüche 1 bis 5, ferner umfassend ein fotothermales Umwandlungsmittel (D), das Licht mit einer Wellenlänge von 700 bis 1.300 nm absorbiert.

7. Reliefdruckplattenvorläufer für die Lasergravur, umfassend eine Relief-bildende Schicht, die die Harzzusammensetzung für die Lasergravur gemäß irgendeinem der Ansprüche 1 bis 6 umfasst.

8. Reliefdruckplattenvorläufer für die Lasergravur gemäß Anspruch 7, worin die Relief-bildende Schicht vernetzt worden ist.

9. Verfahren zur Herstellung eines Reliefdruckplattenvorläufers für die Lasergravur, wobei das Verfahren umfasst:
(i) Bilden einer Relief-bildenden Schicht, die die Harzzusammensetzung für die Lasergravur gemäß irgendeinem der Ansprüche 1 bis 6 umfasst; und
(ii) Vernetzen der Relief-bildenden Schicht unter Verwendung von mindestens einem von Wärme oder Licht, um eine vernetzte Relief-bildende Schicht zu bilden.

10. Verfahren zur Herstellung einer Reliefdruckplatte, umfassend:
die Schritte (i) und (ii) zum Herstellen eines Reliefdruckplattenvorläufers, wie in Anspruch 9 definiert; und
(iii) das Lasergravieren der vernetzten Relief-bildenden Schicht.

11. Verfahren zur Herstellung einer Reliefdruckplatte gemäß Anspruch 10, ferner umfassend
(iv) Waschen der vernetzten Relief-bildenden Schicht mit einer Alkali-Behandlungsflüssigkeit.

12. Verfahren zur Herstellung einer Reliefdruckplatte gemäß Anspruch 10 oder 11, worin das Vernetzen (ii) unter Verwendung von Wärme durchgeführt wird.

13. Reliefdruckplatte, umfassend eine Reliefschicht, die erhältlich ist durch das Verfahren zur Herstellung einer Reliefdruckplatte gemäß irgendeinem der Ansprüche 10 bis 12.

14. Reliefdruckplatte gemäß Anspruch 13, worin die Shore-A-Härte der Reliefschicht 50 bis 90° beträgt.

## Revendications

1. Composition de résine pour gravure au laser, comprenant au moins un dérivé de phénol (A) représenté par la formule suivante (A), un polymère de liant (B), et un agent de réticulation (C), dans laquelle la teneur du dérivé de phénol (A) par rapport à la teneur totale en solides de la composition de résine est de 5 % en masse à 50 % en masse, et dans laquelle l'agent de réticulation (C) est un composé ayant une pluralité de résidus d'anhydride acide ; un composé ayant une pluralité de groupes isocyanate ; ou un composé ayant un groupe -SiR¹R² R³, dans laquelle R¹ à R³ représentent chacun indépendamment un atome d'hydrogène, un atome d'halogène, un groupe hydroxy, ou un groupe organique monovalent, pourvu qu'au moins un de R¹ à R³ représente un groupe alkyle, un groupe aryle, un groupe alcoxy, un groupe hydroxy, ou un atome d'halogène : 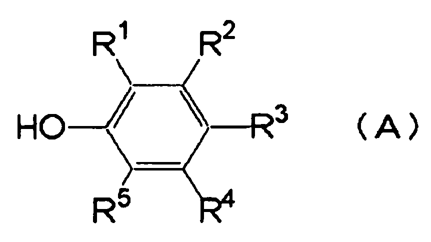 dans laquelle R¹, R², R³, R⁴ et R⁵ représentent chacun indépendamment un atome d'hydrogène ou un substituant monovalent ; au moins l'un de R¹, R², R³, R⁴, ou R⁵ est un substituant monovalent ayant une structure représentée par -X-R⁶ ; X représente une liaison simple, -O-, -NR⁷-, -S-, -COO-, -CONR⁸-, -COS-, -OCO-, -NR⁹CO-, -SCO-, -OCONH-, -NR¹⁰CONH-, -SCONH-, -SO₃-, -OSO₂-, ou -SO₂- ; R⁶ représente un groupe alkyle, un groupe alcényle, un groupe alcynyle, un groupe aryle, ou un groupe hétérocyclique, dans lequel le nombre d'atomes constitutifs autres que des atomes d'hydrogène dans chacun de ces groupes est de 1 à 20 ; et R⁷, R⁸, R⁹ et R¹⁰ représentent chacun indépendamment un atome d'hydrogène, un groupe alkyle, un groupe alcényle, un groupe alcynyle, un groupe aryle, ou un groupe hétérocyclique, dans lequel le nombre d'atomes constitutifs autres que des atomes d'hydrogène dans chacun de ces groupes est de 1 à 20.

2. Composition de résine pour gravure au laser selon la revendication 1, dans laquelle une température de transition vitreuse (Tg) du polymère de liant (B) est de 20 °C à 200 °C.

3. Composition de résine pour gravure au laser selon la revendication 1 ou 2, dans laquelle le polymère de liant (B) comprend un groupe fonctionnel capable de réagir avec un groupe réticulable contenu dans l'agent de réticulation (C).

4. Composition de résine pour gravure au laser selon l'une quelconque des revendications 1 à 3, dans laquelle le polymère de liant (B) comprend un ou plus éléments sélectionné(s) à partir du groupe constitué par de l'acétal de polyvinyle, un dérivé de celui-ci, et une résine acrylique.

5. Composition de résine pour gravure au laser selon l'une quelconque des revendications 1 à 4, dans laquelle le polymère de liant (B) comprend du butyral de polyvinyle ou un dérivé de celui-ci.

6. Composition de résine pour gravure au laser selon l'une quelconque des revendications 1 à 5, comprenant en outre un agent de conversion photothermique (D) qui absorbe de la lumière ayant une longueur d'onde de 700 nm à 1 300 nm.

7. Précurseur de plaque d'impression en relief pour gravure au laser, comprenant une couche formant un relief comprenant la composition de résine pour gravure au laser selon l'une quelconque des revendications 1 à 6.

8. Précurseur de plaque d'impression en relief pour gravure au laser selon la revendication 7, dans lequel la couche formant un relief a été réticulée.

9. Procédé pour produire un précurseur de plaque d'impression en relief pour gravure au laser, le procédé comprenant :
(i) la formation d'une couche formant un relief comprenant la composition de résine pour gravure au laser selon l'une quelconque des revendications 1 à 6 ; et
(ii) la réticulation de la couche formant un relief en utilisant au moins l'une de chaleur ou de lumière pour former une couche formant un relief réticulée.

10. Procédé pour fabriquer une plaque d'impression en relief, comprenant :
les étapes (i) et (ii) pour produire un précurseur de plaque d'impression en relief tel que défini à la revendication 9 ; et
(iii) la gravure au laser de la couche formant un relief réticulée.

11. Procédé pour fabriquer une plaque d'impression en relief selon la revendication 10, comprenant en outre (iv) le lavage de la couche formant un relief réticulée avec un liquide de traitement alcalin.

12. Procédé pour fabriquer une plaque d'impression en relief selon la revendication 10 ou 11, dans lequel (ii) la réticulation est menée en utilisant de la chaleur.

13. Plaque d'impression en relief comprenant une couche en relief, qui peut être obtenue par le procédé pour fabriquer une plaque d'impression en relief selon l'une quelconque des revendications 10 à 12.

14. Plaque d'impression en relief selon la revendication 13, dans laquelle la dureté Shore A de la couche en relief est de 50° à 90°.
